(19) Europäisches Patentamt
European Patent Office
Office européen des brevets

(11) EP 2 334 078 A1

(12) **EUROPEAN PATENT APPLICATION**

(43) Date of publication:
**15.06.2011 Bulletin 2011/24**

(51) Int Cl.:
*H04N 7/26* (2006.01) *H04N 7/50* (2006.01)

(21) Application number: **09015431.1**

(22) Date of filing: **14.12.2009**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(71) Applicant: **Panasonic Corporation**
**Kadoma-shi**
**Osaka 571-8501 (JP)**

(72) Inventors:
• **Knicker, Florian**
  **63225 Langen (DE)**
• **Narroschke, Matthias, Dr.**
  **63225 Langen (DE)**

(74) Representative: **Grünecker, Kinkeldey,**
**Stockmair & Schwanhäusser**
**Anwaltssozietät**
**Leopoldstrasse 4**
**80802 München (DE)**

(54) **Constrained post processing**

(57) The present invention relates to data compression, in particular to coding and decoding of video and/or audio data, and provides a method for taking quantization constraints into account during post-processing. Specifically, quantization information indicating the threshold values employed during the quantization process may be determined at the encoder side and encoded together with the quantized data. The quantization information may be employed at the decoder side to detect whether data has been overly altered by post-filtering, i.e., whether a post-filtered data value is within a quantization interval other than the quantization interval of the original data value. In this case, the overly altered data value is replaced by a correction value, which is determined at the encoder side and also encoded together with the quantized data.

Fig. 6

**Description**

The present invention relates to data compression, in particular to encoding and decoding of video data.

BACKGROUND OF THE INVENTION

For the compression of video data, a plurality of video encoding standards has been developed. Such video standards are, for instance, ITU-T standards denoted with H.26x and ISO/IEC standards denoted with MPEG-x. The most up-to-date and advanced video encoding standard is currently the standard denoted as H.264/MPEG-4 AVC.

All of these standards are based on hybrid video coding, which consists of the following main stages:

(a) Dividing each individual video frame into two-dimensional blocks of pixels in order to subject each video frame to data compression at a block level.

(b) Decorrelating spatiotemporal video information by applying a spatio-temporal prediction scheme to each block and by transforming the prediction error from the spatial domain into the frequency domain so as to obtain coefficients.

(c) Reducing the overall amount of data by quantizing the resulting coefficients.

(d) Compressing the remaining data by encoding the quantized coefficients and prediction parameters by means of an entropy coding algorithm.

Hence, state-of-the-art video standards employ a Differential Pulse Code Modulation (DPCM) approach which only transmits differences between blocks of an input video sequence and their predictions based on previously encoded blocks ("the locally decoded image"). One of the prediction schemes that may be employed by these video coding standards is motion compensated prediction. In this prediction scheme, at least one motion vector is determined for each block of video data in order to describe image displacements caused be object and/or camera movements. Based on the motion vectors determined, the image content of one block may be predicted at least to a certain extend from the image content of previously coded blocks. The difference between the predicted and the actual input image content is called the prediction error, which is then encoded together with the motion vectors rather than the actual input image content. In this manner, a substantial reduction in the amount of information to be coded can be achieved for most "natural" video sequences.

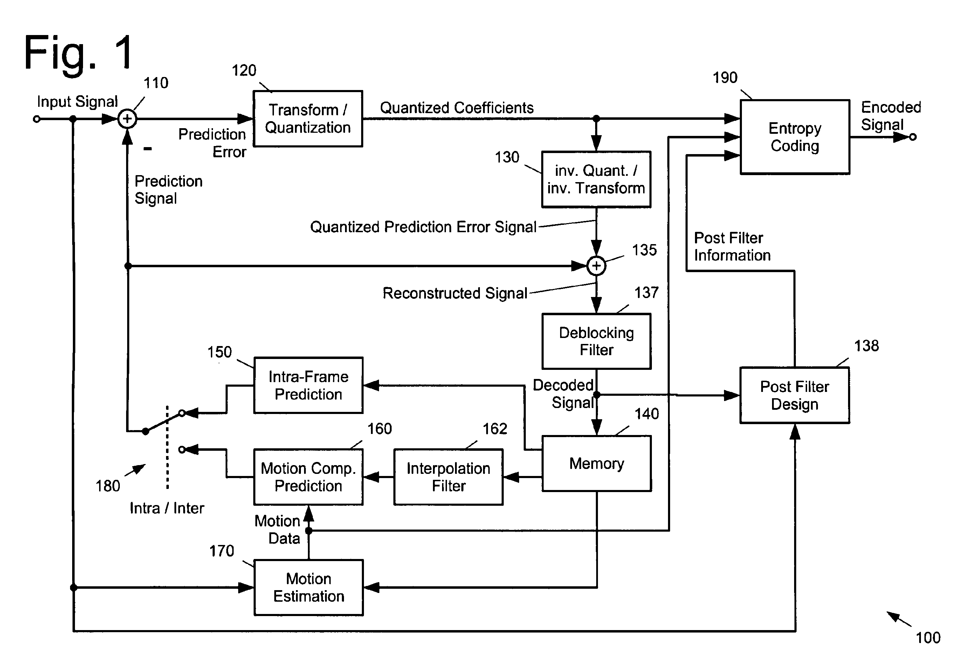

Figure 1 is an exemplary block diagram of a conventional video encoder, which is in accordance with the H.264 / AVC standard. The video encoder, generally denoted by reference numeral 100, comprises a subtractor 110 for determining differences between a current block of a video image (input signal) and a prediction signal of the current block which is based on previously encoded blocks ("the locally decoded image") stored in memory 140. The memory unit 140 thus operates as a delay unit that allows a comparison between current signal values and a prediction signal generated from previous signal values. A transform and quantization unit 120 transforms the resulting prediction error from the spatial domain to the frequency domain and quantizes the obtained coefficients. An entropy coding unit 190 entropy encodes the quantized coefficients.

The locally decoded image is provided by a decoding unit incorporated into video encoder 100. The decoding unit performs the encoding steps in reverse manner. An inverse quantization and inverse transform unit 130 dequantizes the quantized coefficients and applies an inverse transformation to the dequantized coefficients. In adder 135, the decoded differences are added to the prediction signal to form the locally decoded image.

Due to the quantization, quantization noise is superposed to the reconstructed video signal. Due to the blockwise coding, the superposed noise often has a blocking characteristic, which may be subjectively annoying. In order to reduce the blocking characteristic, a deblocking filter 137 is applied to every reconstructed macroblock. The deblocking filter is applied on the reconstructed signal, which is the sum of the prediction signal and the quantized prediction error signal. The deblocked signal is the decoded signal, which is generally displayed. The deblocking filter in H.264/AVC has the capability of local adaptation. In the case of a high degree of blocking noise, a strong low pass filter is applied whereas for a low degree of blocking noise, a weak low pass filter is applied. The strength of the low pass filter is determined by the prediction and by the quantized prediction error signal. This deblocking filter has the following two benefits:

1. Block edges are smoothed resulting in an improved subjective quality of decoded images.

2. Since the filtered macroblock is used for the motion-compensated prediction of further images, the filtering may result in smaller prediction errors and thus in improved coding efficiency.

Intra-coded macroblocks are a specific case in this context; they are filtered before displaying, but intra prediction is carried out using the unfiltered reconstructed macroblocks.

As an example for deblocking at a vertical block boundary, a linear deblocking filter with four coefficients is provided. This filter is applied to input samples $p_2$, $p_1$, $p_0$, $q_0$, $q_1$ and $q_2$, wherein $p_0$ and $q_0$ are two adjacent pixels at the block boundary, $p_1$ and $q_1$ pixels adjacent to $p_0$ and qo, and so on. The filter output $p_{0,new}$ and $q_{0,new}$ is then defined as $p_{0,new} = (p_2 - (p_1 \ll 1) + (p_0 + q_0 + 1) \gg 1) \gg 1$ and $q_{0,new} = (q_2 - (q_1 \ll 1) + (q_0 + p_0 + 1) \gg 1) \gg 1$.

The type of prediction that is employed by video encoder 100 depends on whether the macro blocks are encoded in "Intra" or "Inter" mode. In "Intra" mode the video encoding standard H.264/AVC uses a prediction scheme based on already encoded macro blocks of the same image in order to predict subsequent macro blocks. In "Inter" mode, motion compensated prediction between corresponding blocks of several consecutive frames is employed.

Only Intra-encoded images (I-type images) can be decoded without reference to any previously decoded image. The I-type images provide error resilience for the encoded video sequence. Further, entry points into bit streams of encoded data are provided by the I-type images in order to enable a random access, i.e. to access I-type images within the sequence of encoded video images. A switch between Intra-mode, i.e. a processing by Intra-frame prediction unit 150, and Inter-mode, i.e. a processing by motion compensated prediction unit 160, is controlled by Intra/Inter switch 180.

In "Inter" mode, a macro block is predicted from corresponding blocks of previous frames by employing motion compensated prediction. The estimation is accomplished by a motion estimator unit 170, receiving the current input signal and the locally decoded image. Motion estimation yields two-dimensional motion vectors, representing displacements between the current block and the corresponding block in already decoded frames. Based on the estimated motion, a motion compensated prediction unit 160 provides a prediction signal.

In order to optimize prediction accuracy, motion vectors may be determined at sub-pel resolution, e.g. half-pel or quarter-pel resolution. A motion vector with sub-pel resolution may point to a position within an already decoded frame where no pixel value is available, i.e. a sub-pel position. Hence, spatial interpolation of pixel values is needed in order to perform motion compensation. This is achieved by interpolation filter 162. According to the H.264/AVC standard, a 6-tap Wiener interpolation filter with fixed filter coefficients and a bilinear filter is applied in order to obtain pixel values for sub-pel positions.

For both the "Intra" and the "Inter" encoding mode, the differences between the current input signal and the prediction signal are transformed and quantized by a transform/quantization unit 120 resulting in quantized coefficients. Generally, an orthogonal transformation such as a two-dimensional Discrete Cosine transformation (DCT) or an integer version thereof is employed. More specifically, H.264/MPEG-4 AVC applies two-dimensional separable Integer-DCTs, which are an approximation of the DCT. The block size of the transform can be adjusted for each macroblock. It can be either 4x4 or 8x8. The choice is coded and transmitted to the decoder.

The two-dimensional 4x4 Integer-DCT is given by

$$C = (T_4 \cdot E \cdot T_4^T) \otimes S_4 , \qquad\qquad (1)$$

with

$$T_4 = \begin{pmatrix} +1 & +1 & +1 & +1 \\ +2 & +1 & -1 & -2 \\ +1 & -1 & -1 & +1 \\ +1 & -2 & +2 & -1 \end{pmatrix}, \quad S_4 = \begin{pmatrix} a^2 & ab/2 & a^2 & ab/2 \\ ab/2 & b^2/4 & ab/2 & b^2/4 \\ a^2 & ab/2 & a^2 & ab/2 \\ ab/2 & b^2/4 & ab/2 & b^2/4 \end{pmatrix}, \qquad (2)$$

and

$$a = 1/2, \quad b = \sqrt{2/5} , \qquad\qquad (3)$$

wherein E is a matrix of 4x4 prediction error samples, $T_4$ is the 4x4 transform matrix, and $S_4$ is a 4x4 matrix, which is used for norming such that the 4x4 coefficient matrix C has the same energy as the 4x4 sample matrix *E.* The sign $\otimes$ denotes element-wise multiplication, not a matrix multiplication.

The two-dimensional 8x8 Integer-DCT is given by

$$C = (T_8 \cdot E \cdot T_8^T) \otimes S_8 , \qquad (4)$$

with

$$T_8 = \begin{vmatrix} 8 & 8 & 8 & 8 & 8 & 8 & 8 & 8 \\ 12 & 10 & 6 & 3 & -3 & -6 & -10 & -12 \\ 8 & 4 & -4 & -8 & -8 & -4 & 4 & 8 \\ 10 & -3 & -12 & -6 & 6 & 12 & 3 & -10 \\ 8 & -8 & -8 & 8 & 8 & -8 & -8 & 8 \\ 6 & -12 & 3 & 10 & -10 & -3 & 12 & -6 \\ 4 & -8 & 8 & -4 & -4 & 8 & -8 & 4 \\ 3 & -6 & 10 & -12 & 12 & -10 & 6 & -3 \end{vmatrix} , \qquad (5)$$

$$S_8 = \begin{vmatrix} c^2 & ce & cd & ce & c^2 & ce & cd & ce \\ ce & e^2 & de & e^2 & ce & e^2 & de & e^2 \\ cd & de & d^2 & de & cd & de & d^2 & de \\ ce & e^2 & de & e^2 & ce & e^2 & de & e^2 \\ c^2 & ce & cd & ce & c^2 & ce & cd & ce \\ ce & e^2 & de & e^2 & ce & e^2 & de & e^2 \\ cd & de & d^2 & de & cd & de & d^2 & de \\ ce & e^2 & de & e^2 & ce & e^2 & de & e^2 \end{vmatrix} , \qquad (6)$$

$$c = \sqrt{1/8}, \quad d = \sqrt{1/5}, \quad e = \sqrt{33/289} , \qquad (7)$$

wherein E is a matrix of 8x8 prediction error samples, $T_8$ is the 8x8 transform matrix, and $S_8$ is an 8x8 matrix used for norming such that the 8x8 coefficient matrix C has the same energy as the 8x8 sample matrix *E.* In the following, the coefficients of the coefficients matrix C are denoted as $c_{i,j}$.

The coefficients are quantized in order to reduce the amount of data that has to be encoded. The step of quantization is controlled by quantization tables that specify the precision and therewith the number of bits that are used to encode each frequency coefficient. Lower frequency components are usually more important for image quality than high frequency components so that more bits are spent for coding the low frequency components than for the higher ones.

Specifically, the quantizer is given by representation values and decision thresholds between adjacent representation values. The video coding standard only defines the representation values but not the decision thresholds. For this reason, the decision thresholds as used in the H.264/MPEG-4 reference model are described here. In the following, a quantization interval is the interval between two adjacent decision thresholds.

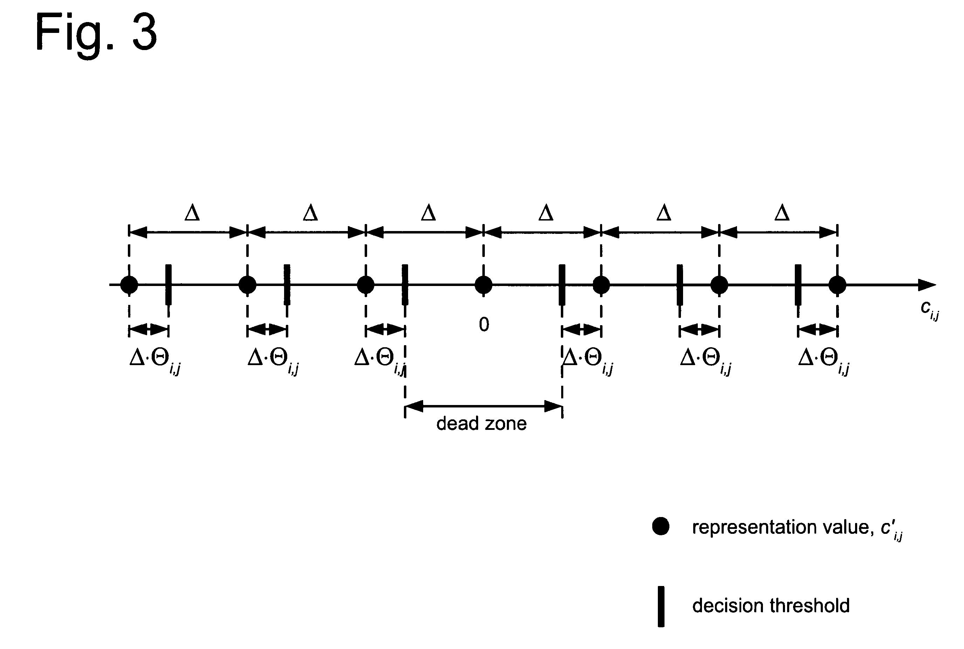

In the H.264/MPEG-4 reference model, each coefficient $c_{i,j}$ is quantized using a quantizer as illustrated in Fig. 3. The step size of the quantizer is $\Delta$. It is the same for every coefficient of a macroblock in the case in which no quantization weighting matrices are used. It may be different for every coefficient of a macroblock in the case in which quantization weighting matrices are used. In this case it is $\Delta_{i,j}$. The decision thresholds are adjusted using so-called dead zone parameters $\Theta_{i,j}$. This parameter is the same for all quantization steps of a coefficient $c_{i,j}$.

The quantization step size $\Delta$ is adjusted once per macroblock using the so called quantization parameter QP, which can have integer values between 0 and 51, namely

$$\Delta(QP) = \Delta_0(QP \bmod 6) \cdot 2^{\lfloor QP/6 \rfloor}, \quad QP \in \{0, 1, \ldots, 51\}, \qquad (8)$$

with

$$\Delta_0(k) = \begin{cases} 10; & \text{if } k=0 \\ 11; & \text{if } k=1 \\ 13; & \text{if } k=2 \\ 14; & \text{if } k=3 \\ 16; & \text{if } k=4 \\ 18; & \text{if } k=5 \end{cases} . \qquad (9)$$

An index $sn_{i,j}$ is assigned to each quantization interval according to the equation

$$sn_{i,j} = \lfloor |c_{i,j}|/\Delta + \Theta_{i,j} \rfloor \cdot \mathrm{sign}(c_{i,j}), \quad \mathrm{sign}(k) = \begin{cases} -1; & \text{if } k<0 \\ 0 & \text{if } k=0 \\ +1 & \text{if } k>0 \end{cases} . \qquad (10)$$

The representation values of the quantized coefficients $c'_{i,j}$ result from the indexes $sn_{i,j}$ and the quantization step size $\Delta$ according to the equation

$$c'_{i,j} = \Delta \cdot sn_{i,j}. \qquad (11)$$

In order to adapt to changing statistics, the dead zone parameters $\Theta_{i,j}$ can be adjusted during the encoding process. In the reference model of H.264/MPEG-4 AVC, the dead zone parameters $\Theta_{i,j}$ are adjusted such that the following criterion is fulfilled,

$$E\left[|c_{i,j}| \,\middle|\, |c_{i,j}| > (1 - \Theta_{i,j} \cdot \Delta)\right] = E\left[|c'_{i,j}| \,\middle|\, |c'_{i,j}| > (1 - \Theta_{i,j} \cdot \Delta)\right]. \qquad (12)$$

This criterion leads to a minimum mean squared quantization error. In the reference model of H.264/MPEG-4 AVC, the deadzone parameters $O_{i,j}$ are initialized with $\Theta_{i,j}$=1/6 (INTER-coding) or $\Theta_{i,j}$=1/3 (INTRA-coding) and continuously adapted after the quantization of a coefficient. This adaptation is performed by

$$\Theta_{i,j}^{new} = \Theta_{i,j}^{old} + 0.001 \cdot \frac{|c_{i,j}| - |c'_{i,j}|}{\Delta} \cdot \begin{cases} 1; & \text{if } c'_{i,j} \neq 0 \\ 0 & \text{else} \end{cases} . \qquad (13)$$

After quantization, the two-dimensional array of quantized coefficients $c'_{i,j}$ has to be converted into a one-dimensional string to pass it to the entropy encoder. This conversion is done by scanning the array in a predetermined sequence. The thus obtained one-dimensional sequence of quantized coefficients is compressed and coded by an entropy coding unit 190 by means of a variable length code (VLC). The resulting bitstream is multiplexed with the motion information and stored on a recording medium or transmitted to the decoder side.

In order to improve the subjective image quality, a so-called post filter may be applied at the decoder side. The standard H.264/AVC allows sending of post filter information for such a post filter by the use of an SEI (Supplemental Enhancement Information) message. The post filter information may be either the filter coefficients themselves or cross-correlation information which can be used to calculate the filter coefficients. The post filter information is determined on the encoder side by means of a post filter design unit 138, which compares the locally decoded signal and the original input signal. The output of the post filter design unit 138 is also fed to the entropy coding unit 190 in order to be encoded and inserted into the encoded signal.

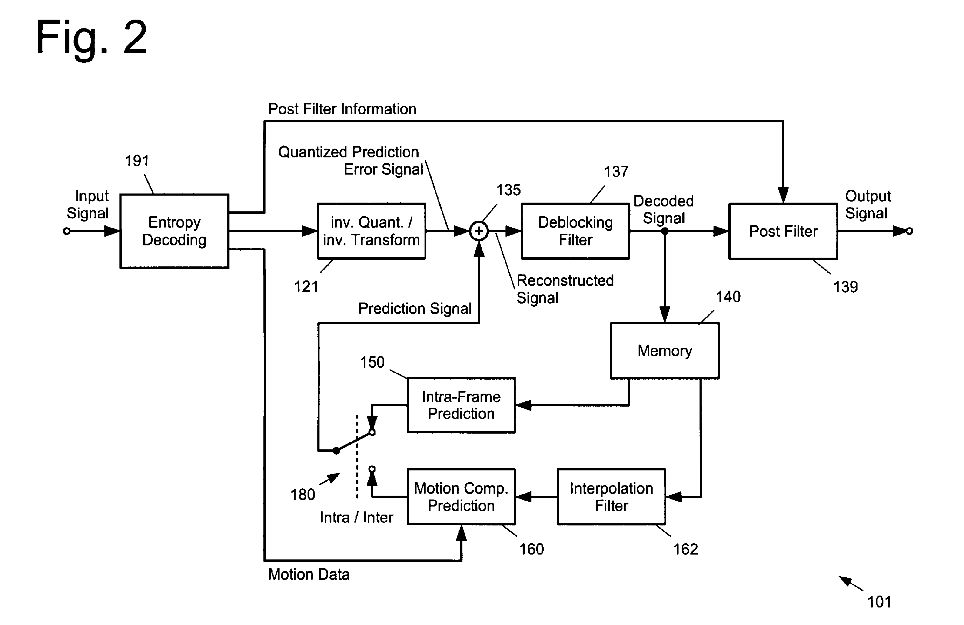

For reconstructing the encoded images at the decoder side, the encoding process is applied in reverse manner. A schematic block diagram, illustrating the configuration of the corresponding decoder, is shown in Fig. 2.

In decoder 101 of Fig. 2, first the entropy encoding of coefficients and motion data is reversed in an entropy decoding unit 191. This step also involves an inverse scanning in order to convert the string of decoded coefficients into a two-dimensional array of data as it is required for the inverse transform. The decoded block of quantized coefficients is then submitted to an inverse quantizer and inverse transform unit 121 and the decoded motion data is sent to a motion compensated prediction unit 160. Depending on the actual value of the motion vector, interpolation of pixel values may be needed in order to perform the motion compensated prediction. This interpolation is performed by interpolation filter 162.

The result of the inverse transform is the quantized prediction error in the spatial domain, which is added by adder 135 to the prediction signal stemming from the motion compensated prediction unit 160 in Inter-mode or stemming from an Intra-frame prediction unit 150 in Intra-mode. The reconstructed image may be passed through a deblocking filter 137 and the resulting decoded signal is stored in memory 140 to be applied to prediction units 150, 160.

The entropy decoding unit 191 is also retrieving the post filter information determined by the encoder. The post filter unit 139 employs this information in order to set up a post filter that is applied to the decoded signal in order to further improve image quality.

The above described conventional post filter is an example of an adaptive filter, namely of a filter that is adapted to the properties of the video signal that is to be encoded. Many implementations of such an adaptive filter are based on Wiener filters, i.e. on linear optimum time-discrete filters. Wiener filters are generally applied in order to get rid of additive noise. In the context of video coding, the quantization error can be considered as noise superimposed on the original video input signal.

One of the advantages of the Wiener filter approach is that the filter coefficients can be determined from the auto-correlation of the corrupted signal (decoded video signal) and the cross-correlation of the corrupted signal and the desired signal (original video input signal). More specifically, if R denotes the *MxM* autocorrelation matrix of the corrupted signal and *p* denotes the *Mx*1 cross-correlation vector between the corrupted signal and the desired signal, wherein M is the length of the Wiener filter, then the *Mx*1 vector of optimum Wiener filter coefficients w is given as

$$w = R^{-1} \cdot p \, , \qquad\qquad (14)$$

wherein $R^{-1}$ is the inverse of the autocorrelation matrix R.

From reference EP 1 841 230 A, for instance, it is known to apply adaptive filters within the prediction loop, namely to the reconstructed signal directly before or instead of the deblocking filter 137, to the output of the deblocking filter, or to the prediction signal. The purpose of these conventional video filters is to minimize the mean squared prediction error and/or the mean squared reconstruction error and/or to deblock the image so as to enhance subjective picture quality.

Using a de-artifact filter, such as deblocking filter 137 in Figs. 1 or 2, and/or a post filter, such as post filter 139 in Fig. 2, may generally be beneficial in terms of subjective image quality. Under certain conditions, however, additional artifacts may be introduced by these filters.

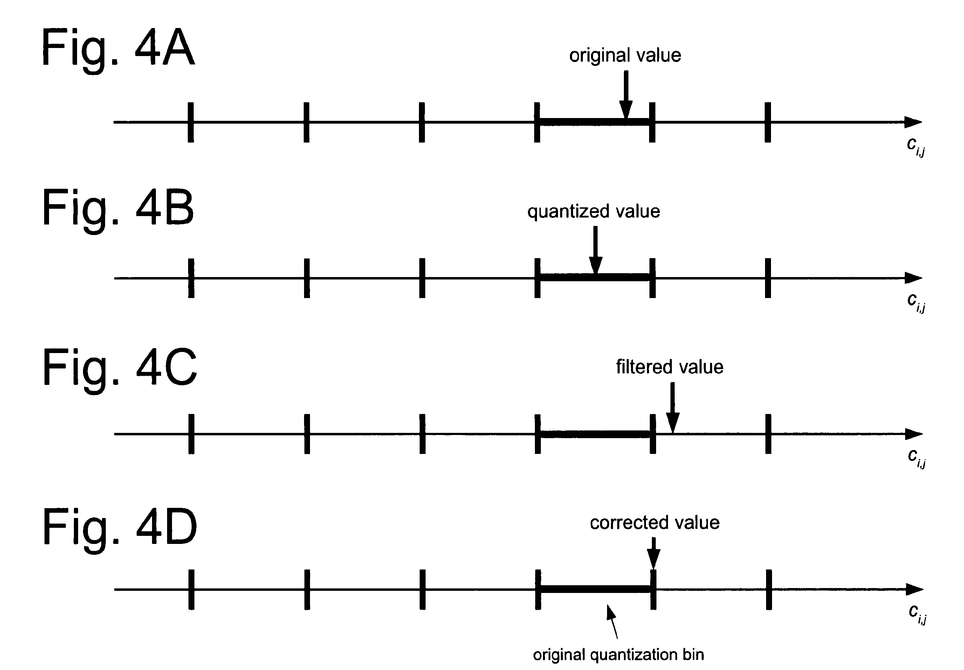

The issue of "over-filtering" is addressed in international application WO 2008/057308 A2 in the context of the MPEG-4 AVC standard. From this reference it is known to limit the effect of an in-loop de-artifact filter by checking whether the original coefficient value and the corresponding value after application of the filter are still within the same quantization bin. If this is not case, i.e., if the application of the filter has excessively altered the value of the coefficient, a correction is applied. The correction replaces the value of the excessively altered coefficient by a boundary value of the original value's quantization bin, that is, the effect of the in-loop filter is limited to the original quantization bin. This mechanism is illustrated in Figs. 4A-D.

According to H.264/MPEG-4, only the representation values are predefined, but not the decision thresholds. The encoder may employ arbitrary decision thresholds, which, however, are generally not known by the decoder. Hence, the method of WO 2008/057308 A2 has to rely on certain assumptions on the decision thresholds and the quantization intervals in order to detect a coefficient that needs to be corrected after filtering.

SUMMARY OF THE INVENTION

Even with the enforcement of quantization constraints as suggested by WO 2008/057308 A2, the performance of conventional de-artifact filters leaves room for improvement. Therefore, it is the aim of the present invention to provide methods for compressing and decompressing data, in particular video data, with improved coding efficiency.

This is achieved by the features as set forth in the independent claims. Preferred embodiments are the subject matter of dependent claims.

It is the particular approach of the present invention to encode quantization information indicating the quantization thresholds employed during the quantization process, together with the quantized data, so that a decoder may detect whether data has been overly altered by post-filtering, i.e., whether a post-filtered data value is within a quantization interval other than the quantization interval of the original data value. In this case, the overly altered data value may be replaced by a correction value, which is also determined at the encoder side and encoded together with the quantized data.

According to a first aspect of the present invention, a method for data compression is provided. The method comprises the steps of receiving input data indicating a plurality of data values; obtaining a plurality of threshold values, said plurality of threshold values indicating a mapping between data values and a plurality of predefined representation values; encoding, for each data value of the plurality of data values and in accordance with the plurality of threshold values obtained, a representation value of the plurality of representation values representing the data value; encoding the obtained plurality of decision threshold values; and providing output data indicating the encoded representation values and the encoded decision threshold values.

Preferably, each of the obtained plurality of decision threshold values is encoded relative to a corresponding one of the plurality of predefined representation values. In this manner, i.e., by encoding the decision threshold values as an offset value to a corresponding one of the representation values, the data can be compressed even more efficiently.

Preferably, the compression method further comprises the steps of determining, for each data value, the greatest threshold value of the plurality of threshold values that is less than the data value; and determining the smallest representation value of the plurality of representation values that is greater than the determined threshold value as the representation value representing the data value. Alternatively, the compression method may also comprise the steps of determining, for each data value, the smallest threshold value of the plurality of threshold values that is greater than the data value; and determining the greatest representation value of the plurality of representation values that is less than the determined threshold value as the representation value representing the data value. In this manner, the appropriate representation value can be determined for each data value.

In a preferred embodiment, the compression method further comprises the steps of determining, for at least one of the plurality of representation values, a correction value for correcting filtering artifacts introduced during decompressing and post-filtering of the compressed data; and encoding the at least one determined correction value, wherein the output data is further indicating the at least one encoded correction value. The compressed output data thus contains the entire information (quantization information and correction information) required for detecting and correcting oversampling artifacts at the decoder side.

Preferably, the compression method further comprises the steps of determining data values of the plurality of data values that experience over-filtering upon decompressing and post-filtering, wherein the step of determining the at least one correction value comprises computation of the mean of the data values determined. In this manner, over-filtered data values can be corrected by replacing them with the conditional expectation value of data values that are known to be prone for over-filtering.

Preferably, the data values of the plurality of data values that experience over-filtering upon decompressing and post-filtering are determined by applying a post-filter to the corresponding representation values and deciding for each of the data values whether the data value and the corresponding post-filtered representation value are mapped, by the mapping indicated by the plurality of threshold values, to two different representation values. In addition, the data values of the plurality of data values that experience over-filtering upon decompressing and post-filtering may be determined by further deciding for each of the data values whether the data value is mapped, by the mapping indicated by the plurality of threshold values, to a representation value greater than or less than the corresponding post-filtered representation value is mapped to. In this manner, different forms of over-filtering may be taken care of by providing dedicated correction values for each of these forms.

Preferably, the at least one determined correction value is encoded relative to the corresponding representation value or relative to a corresponding decision threshold value. In this manner, i.e., by encoding the correction values as an offset value to a corresponding one of the representation or decision threshold values, the data can be compressed even more efficiently.

In another preferred embodiment, the compression method further comprises the steps of determining, for a certain representation value of the plurality of predefined representation values, a set of data values of the plurality of data values that are represented by the certain representation value; and adjusting at least one of the plurality of threshold values such that the mean of the determined set of data values equals the certain representation value. With the adjusted threshold values, the data values will be represented by the set of representation values in an unbiased manner.

According to a second aspect of the present invention, a method for encoding video data is provided. The method comprises the steps of receiving a block of video data; transforming the received block of video data from the spatial domain into the frequency domain so as to obtain a plurality of coefficient values; and compressing the plurality of coefficient values with a method according to the first aspect of the present invention.

According to a third aspect of the present invention, a method for data decompression is provided. The method comprises the steps of receiving input data comprising a plurality of quantized data values and quantization information indicating a plurality of quantization intervals; applying a post-processing filter to the plurality of quantized data values to obtain a plurality of filtered data values; determining, for each quantized data value, whether the quantized data value and the corresponding filtered data value are part of two different quantization intervals of the plurality of quantization intervals; and responsive to a result of the determining step, replacing the filtered data value by a correction data value.

Preferably, the quantization information comprises a plurality of threshold values, such that a decoder may readily determine whether a quantization interval of a data value has been altered due to the application of a post-filter. This may, for instance, be achieved by determining, for each quantized data value, whether the quantized data value and the corresponding filtered data value are separated by a threshold value of the plurality of threshold values.

In a preferred embodiment, the correction data value is comprised in and obtained from the received input data. In this manner, optimum correction values may be determined at the encoder side on the basis of statistical properties of the original data values.

Preferably, the decompression method further comprises the step of selecting the correction data value from a plurality of correction data values on the basis of the quantized data value. In addition, the correction data value may be further selected on the basis of whether the quantized data value is greater than or less than the corresponding filtered data value. In this manner, optimum correction values may be provided independently for each representation value and/or for different forms of over-filtering.

According to a fourth aspect of the present invention, a method for decoding video data is provided. The method comprises the steps of receiving a plurality of coefficient values; decompressing the plurality of coefficient values with a method according to the third aspect of the present invention; and transforming the received block of video data from the frequency domain into the spatial domain so as to obtain a block of video data.

The above and other advantages and features of the present invention will become more apparent from the following description and preferred embodiments given in conjunction with the accompanying drawings, in which:

Fig. 1    is a block diagram of a video encoder according to the H264/AVC standard;

Fig. 2    is a block diagram of a video decoder according to the H264/AVC standard;

Fig.3     is a diagram illustrating the quantization process according to the H264/AVC standard;

Fig. 4    is a diagram illustrating a conventional process for taking quantization constraints into account during post-processing;

Fig. 5    is a diagram illustrating a process for taking quantization constraints into account during post-processing in accordance with an embodiment of the present invention;

Fig. 6    is a block diagram of a video encoder according to a first embodiment of the present invention;

Fig. 7A   is a block diagram of a video decoder according to the first embodiment of the present invention;

Fig. 7B   is a detailed block diagram of the correction unit of Fig. 6 and Fig. 7A;

Fig. 8    is a block diagram of a video encoder according to a second embodiment of the present invention;

Fig.9     is a block diagram of a video decoder according to the second embodiment of the present invention;

Fig. 10   is a diagram illustrating the process of determining optimum decision threshold values in accordance with a third embodiment of the present invention;

Fig. 11A    is a schematic block diagram of a generic data compression unit according to the present invention;

Fig. 11B    is a schematic block diagram of a generic data decompression unit according to the present invention;

Fig. 12A    is a block diagram of a conventional AAC encoder;

Fig. 12B    is a block diagram of a conventional AAC decoder;

Fig. 13A    is a block diagram of an audio encoder in accordance with an embodiment of the present invention;

Fig. 13B    is a block diagram of an audio decoder in accordance with an embodiment of the present invention;

Fig. 14     shows a flowchart of a data compression method according to the general concept of the present invention;

Fig. 15     shows a flowchart of a data decompression method according to the general concept of the present invention;

Fig. 16     is an illustration of a recording medium for storing a program realizing any of the embodiments of the present invention by means of a computer system;

Fig. 17     is a block diagram showing an overall configuration of a content supply system for realizing a content distribution service using the coding and decoding approach of the present invention;

Fig. 18     is a schematic drawing showing a cell phone for using the video/audio coding approach of the present invention;

Fig. 19     is a block diagram illustrating the functional blocks of the cell phone exemplified in Figure 18; and

Fig. 20     is illustrating a wireless digital system for incorporating the coding and decoding approach of the present invention.

DETAILED DESCRIPTION

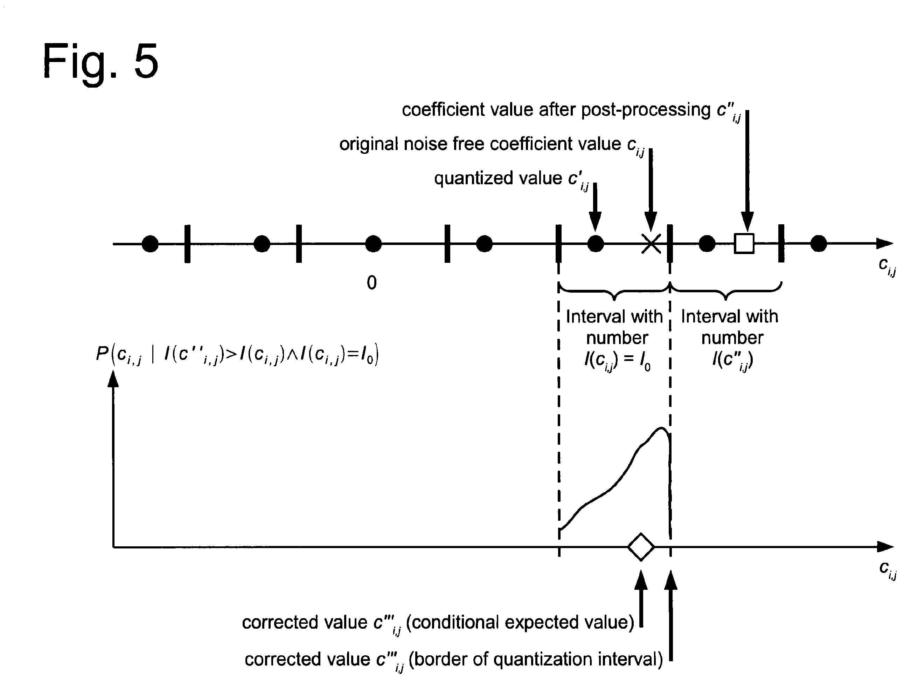

Fig. 5 is a diagram illustrating a process for taking quantization constraints into account during post-processing in accordance with an embodiment of the present invention.

The upper part of Fig. 5 shows, in a manner similar to Fig. 3, a coefficient axis with representation values (circles) and threshold values (vertical lines) that divide the coefficient axis in a plurality of quantization intervals or bins, such that each actual coefficient value $c_{i,j}$ within one of these intervals will be represented by the corresponding representation value $c'_{i,j}$ during to the quantization process. Due to filtering of the quantized coefficient values (e.g. de-blocking filter, post-processing filter, etc.) a situation may occur, where the filtered, quantized coefficient value $c''_{i,j}$ is part of quantization interval $I(c''_{i,j})$ different from the quantization interval $I(c_{i,j})=I_0$ of the unfiltered coefficient value. In this case, the filtered, quantized coefficient value may be replaced by a correction value $c'''_{i,j}$. According to a first embodiment of the present invention, the correction value $c'''_{i,j}$ is either the upper or the lower boundary value of the original quantization interval $I_0$, depending on whether the filtered, quantized coefficient value $c''_{i,j}$ is larger or smaller than the values of the original quantization interval, respectively. A prerequisite for this approach is that the decoder side is aware of the quantization intervals employed by the encoder side. Therefore, additional quantization information is transmitted along with the quantized coefficient values from the encoder side to the decoder side. The additional quantization information may comprise, for instance, the dead zone parameter $\Theta_{i,j}$ as defined in the reference model of H.264/MPEG-4, or a list of the precise values of the decision thresholds employed during quantization. More specifically, the quantization information may be included in the frame data or slice data. This can be either at the beginning of the frame data, which means before the macroblock data or after the macroblock data. Another possibility is to include the quantization information in an SEI message.

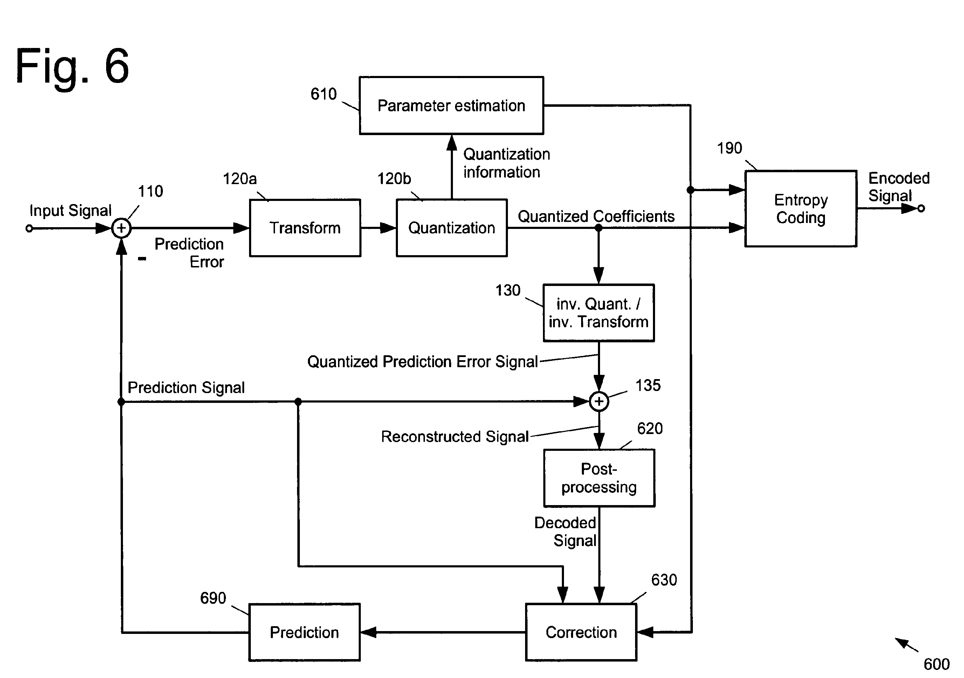

Fig. 6 is a block diagram of a video encoder according to a first embodiment of the present invention. The block diagram of Fig. 6 is similar to that of Fig. 1, wherein like elements are denoted by like reference numerals, a repetition of the detailed description of which is omitted.

The block diagram of Fig. 6 differs from that of Fig. 1 in that the prediction-related functional blocks 140-180 have been condensed into prediction block 690, for the sake of brevity. On the other hand, the transform/quantization unit 120 of Fig. 1 has been split into a transform unit 120a and a quantization unit 120b. The deblocking filter 137 has been replaced by the more general post-processing unit 620. Further, Fig. 6 additionally exhibits a parameter estimation unit 610 and a correction block 630.

The operation of the video encoder according to Fig. 6 is also similar to that of Fig. 1, except that quantization information indicating the quantization intervals employed by the quantization unit 120b is collected by the parameter estimation unit 610 and fed to the entropy coding unit 190 in order to be encoded and included into the output data, and to the correction unit 630 in order to be taken into account when correcting results of the post-processing process, as detailed above in connection with Fig. 5.

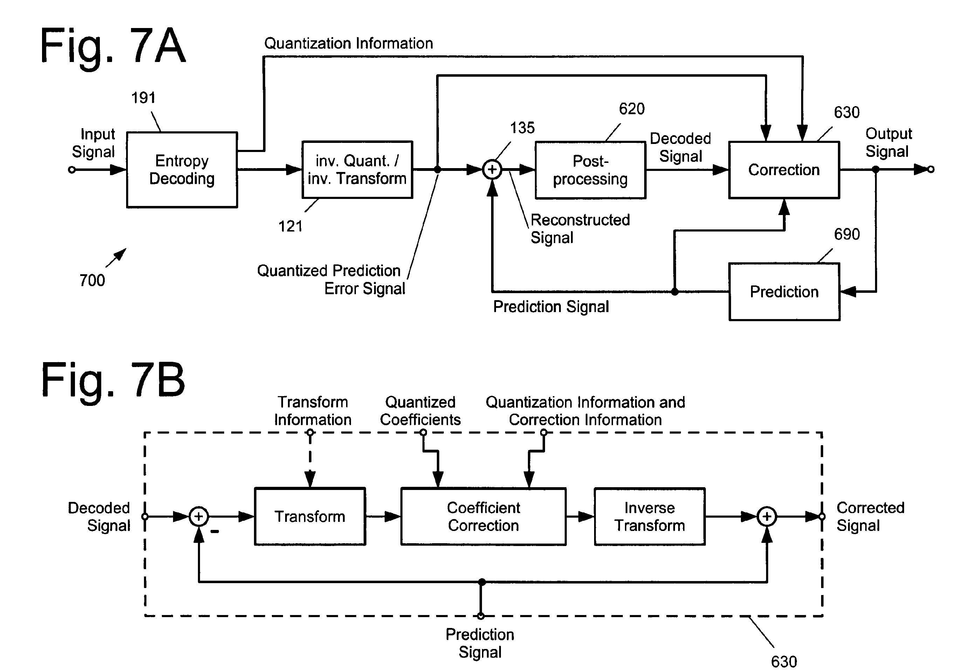

Fig. 7 is a block diagram of a video decoder according to the first embodiment of the present invention. The block diagram of Fig. 7 is similar to that of Fig. 2, wherein like elements are denoted by like reference numerals, a repetition of the detailed description of which is omitted.

The block diagram of Fig. 7 differs from that of Fig. 2 in that the prediction-related functional blocks 140-180 have been condensed into prediction block 690, for the sake of brevity. The deblocking filter 137 has been replaced by the more general post-processing unit 620. Further, Fig. 7 additionally exhibits a correction block 630.

The operation of the video decoder according to Fig. 7A is also similar to that of Fig. 2, except that quantization information indicating the quantization intervals applied at the encoder side is decoded by the entropy decoding unit 191 and fed to the correction unit 630 so as to correct results of the post-processing process performed by the post-processing unit 620. The correction is performed as detailed above in connection with Fig. 5.

It is to be noted that, in the video encoder of Fig. 6, the quantization unit operates on transform coefficients, i.e., in the frequency domain, whereas the post-processing unit operates on the reconstructed signal, i.e., in the spatial domain. In order to take quantization constraints into account for correcting artifacts caused by "over filtering", the correction unit 630 of Fig. 6 and Fig. 7A needs to transform the result of the filtering process back to the frequency domain in order to determine whether any of the filtered coefficient values is part of a quantization interval that is different from the original quantization interval. Moreover, the quantization unit deals with the prediction error only. Therefore, the correction unit also needs to subtract the prediction signal from the reconstructed signal before checking the coefficient values.

It is also to be noted that the H264/AVC standard defines only the inverse transform. Since the generation of the quantized coefficients is a pure encoder only issue, an encoder may use an arbitrary transform. Therefore, it may be beneficial to transmit additional transform information indicating the transformation employed at the encoder side. The transform information may, for instance, comprise coefficients of the transform matrices shown in Eqs. (1)-(7). The transform information may then be employed by the correction unit 630 so as to apply the correct transformation to the post-processed signal.

A block diagram showing an exemplary internal configuration of the correction unit 630 is illustrated in Fig. 7B.

In accordance with the configuration of the first embodiment of the present invention, the decoder at the decoder side (as well as the internal decoder of the video encoder) is aware of the quantization intervals (i.e., the quantization threshold values) that were used during the quantization process. Therefore, the decoder is able to correctly determine, whether any post-processing filter applied to the reconstructed signal has overly altered any of the quantized coefficient values such that the filtered value and the original value became part of two different quantization intervals. Since this form of "over-filtering" may cause disturbing artifacts, the decoder is adapted for correcting the over-filtered coefficient values by replacing them with an appropriate correction value, e.g., by one of the border values of the original quantization interval. In this manner, prediction quality may be improved at the encoder side, resulting in a higher coding efficiency. Moreover, subjective image quality may be enhanced by avoiding artifacts caused by over-filtering of the reconstructed signal at the decoder side.

Referring again to Fig. 5, an improved method for correcting over-filtering artifacts is described, in accordance with a second embodiment of the present invention.

The lower part of Fig. 5 illustrates, in a schematic manner, an exemplary probability distribution of the coefficient values, more specifically, the probability density for coefficient $c_{i,j}$ under the condition that the coefficient value is part of the interval $I_0$ and that application of the post-processing filter results in a filtered, quantized coefficient value $c''_{i,j}$ that is part of quantization interval $I(c''_{i,j})$ located on the right side of the original quantization interval, i.e., $I(c''_{i,j}) > I_0$. It is intuitive to assume that this density function increases as the distance to the right border of the interval decreases. A similar density function may also be considered for the condition that the application of the post-processing filter results in a filtered, quantized coefficient value $c''_{i,j}$ that is part of quantization interval $I(c''_{i,j})$ located on the *left* side of the original quantization interval, i.e., $I(c''_{i,j}) < I_0$.

According to the second embodiment of the present invention, the decoder is adapted for correcting such an over-sampling error by replacing the overly filtered coefficient value by a correction value that is equal to the expected value of the original value under the above condition, namely under the condition that the coefficient value is part of the interval $I_0$ and that application of the post-processing filter results in a filtered, quantized coefficient value $c''_{i,j}$ that is part of a quantization interval $I(c''_{i,j})$ located on the right side of the original quantization interval, i.e.,

$$c'''_{i,j} = E\left[c_{i,j} \mid I(c''_{i,j}) > I(c_{i,j}) \wedge I(c_{i,j}) = I_0\right]. \tag{15}$$

Similar correction values can be defined for other over-filtering conditions, such as the condition that the filtered, quantized coefficient value $c''_{i,j}$ is part of a quantization interval $I(c''_{i,j})$ located on the left side (rather than the right side) of the original quantization interval.

In other words, the correction value is the mean of those coefficient values that are prone to artifacts due to over-filtering. More specifically, the correction value is the mean of those coefficients that experience, upon decompression and post-filtering, a certain form of over-filtering, as defined by the various cases distinguished herebelow.

As it is apparent from Fig. 5, the so defined correction value is generally different from the boundary values of the quantization interval, i.e., from the correction value employed in accordance with the first embodiment.

It is to be noted that the correction values employed in accordance with the second embodiment, i.e., the above described expected values, are dependent on the post-processing filter employed and on the statistical properties of the input data. Hence, said correction values need to be determined at the encoder side during the encoding/compression process and need to be transmitted to the decoder side.

With respect to the correction values that need to be determined and transmitted to the decoder side, at least two cases may be discriminated, namely the case in which the new quantization interval is located to the left of the original quantization interval and the case in which the new quantization interval is located to the right of the original quantization interval. Correction values for these cases may be determined and transmitted independently of each other. Further cases may be discerned, for instance on the basis of the actual representation value concerned, i.e., correction values may be determined for each quantization interval independently, or on the basis of whether the new quantization interval is one, two, three, etc. quantization intervals to the left or the right of the original quantization interval, i.e., on the basis of the difference $[I(c''_{i,j})-I_0]$ or $[c''_{i,j}-c'_{i,j}]$.

In a preferred embodiment, two conditions are distinguished, namely $I(c''_{i,j})>I_0$ and $I(c''_{i,j})<I_0$. For each of the two conditions and each quantization interval, a conditional correction value is estimated, coded and transmitted to the decoder. Further, symmetry aspects in the distribution of the coefficient values may be taken into account. In case of a symmetric distribution of the coefficient values around zero, for instance, the same correction value may be employed for $I(c''_{i,j})>I_0$ (or $I(c''_{i,j})<I_0$) and $I(c''_{i,j})<I_0$ (or $I(c''_{i,j})>I_0$), provided that the interval $I_0$ and $I_0$ are located at symmetric positions around zero.

More specifically, the correction information, i.e., a set of correction values, may be included in the frame data or slice data. This can be either at the beginning of the frame data, which means before the macroblock data or after the macroblock data. Another possibility is to include the correction information in an SEI message.

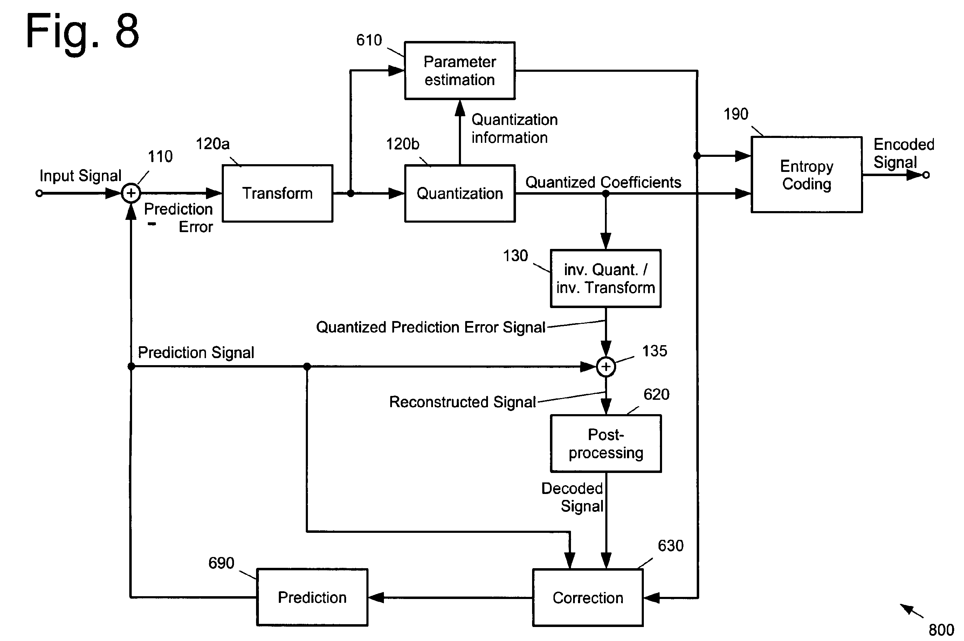

Fig. 8 is a block diagram of a video encoder according to a second embodiment of the present invention. The block diagram of Fig. 8 is similar to that of Fig. 6, wherein like elements are denoted by like reference numerals, a repetition of the detailed description of which is omitted.

The block diagram of Fig. 8 differs from that of Fig. 6 in that the parameter estimation unit 610 receives an additional input from the transform unit 120a in order to be able to estimate the (conditional) probability density of the original coefficient values and the corresponding (conditional) expected values that are employed as correction values by the correction unit 630.

The operation of the video encoder according to Fig. 8 is also similar to that of Fig. 6, except that the parameter estimation unit 610 is also estimating the (conditional) probability density of the original coefficient values and the corresponding (conditional) expected values. The estimated expected values are then also fed to the entropy coding unit 190 in order to be encoded and included into the output data, and to the correction unit 630 in order to be taken into account when correcting results of the post-processing process, as detailed above.

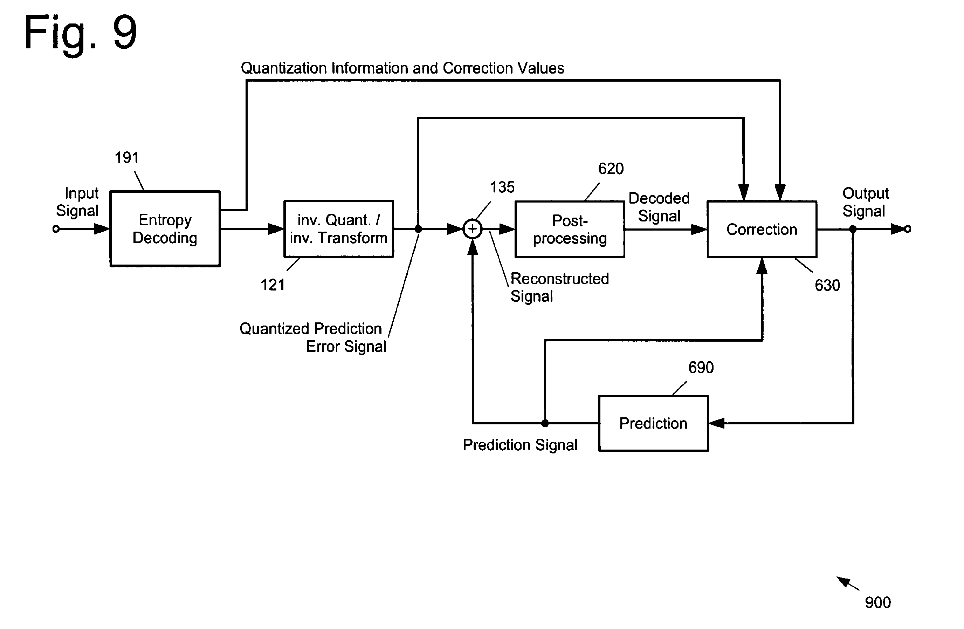

Fig. 9 is a block diagram of a video decoder according to the second embodiment of the present invention. The block diagram of Fig. 9 is similar to that of Fig. 7A, wherein like elements are denoted by like reference numerals, a repetition of the detailed description of which is omitted.

The block diagram of Fig. 9 differs from that of Fig. 7A in that the correction block 630 additionally receives information indicating the correction values to be employed from the decoding unit 191.

The operation of the video decoder according to Fig. 9 is also similar to that of Fig. 7, except that correction values are additionally decoded by the entropy decoding unit 191 and fed to the correction unit 630 so as to correct results of the post-processing process performed by the post-processing unit 620. The correction is performed as detailed above.

In accordance with the configuration of the second embodiment of the present invention, the decoder at the decoder side (as well as the internal decoder of the video encoder) is not only aware of the quantization intervals (i.e., the quantization threshold values) that were used during the quantization process, but also of the optimum correction values that are to be employed for correcting any over-filtered coefficient values. In this manner, any over-filtering artifacts can be properly corrected, leading to improved image quality and/or improved coding efficiency.

As already mentioned above, the H264/AVC standard only defines the set of representation values to be employed during the quantization process but not any decision thresholds, i.e., the quantization intervals. However, the particular choice of the decision threshold values may affect the coding efficiency, the subjective image quality, or both.

In accordance with the third embodiment of the present invention, a method (and a corresponding apparatus) for video encoding and decoding is provided, wherein optimum decision threshold values are individually determined at the encoder side.

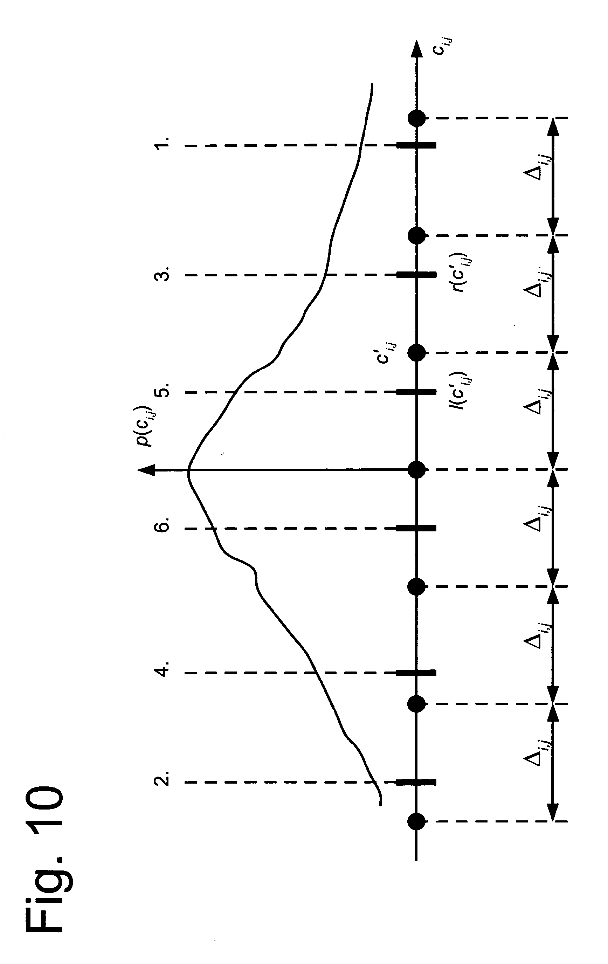

Referring now to Fig. 10, a process of determining optimum decision threshold values in accordance with the third embodiment of the present invention is described. Fig. 10 schematically shows a probability density function of original coefficient values $c_{i,j}$. Further indicated are, in a manner similar to Fig. 3, representation values $c'_{i,j}$ (filled circles) and decision thresholds $l(c'_{i,j})$ and $r(c'_{i,j})$ (bold vertical lines). For each quantization interval $[l(c'_{i,j});r(c'_{i,j})]$, the mean value of the coefficient values within this interval may be computed, i.e.,

$$E\left[c_{i,j} \mid c_{i,j} \in \left[l(c'_{i,j}), r(c'_{i,j})\right]\right] = \frac{\int_{l(c'_{i,j})}^{r(c'_{i,j})} c_{i,j}\, p(c_{i,j})\,\mathrm{d}\,c_{i,j}}{\int_{l(c'_{i,j})}^{r(c'_{i,j})} p(c_{i,j})\,\mathrm{d}\,c_{i,j}} . \qquad (16)$$

Optimum decision thresholds are obtained by requiring that the mean value of the coefficient values within the interval $[l(c'_{i,j});r(c'_{i,j})]$ equals the interval's representation value $c'_{i,j}$, i.e., by adjusting the threshold values such that the following equation is fulfilled,

$$c'_{i,j} = E\left[c_{i,j} \mid c_{i,j} \in \left[l(c'_{i,j}), r(c'_{i,j})\right]\right] . \qquad (17)$$

Since the right border of a quantization interval equals the left border of the next quantization interval, the decision thresholds cannot be determined independently of each other. Hence, the sequence in which these threshold vales are determined matters. An example sequence for determining decision thresholds is illustrated by numbers 1. to 6. in Fig. 10. The first and the second decision threshold can be estimated independently on all the other decision thresholds. All further ones are dependent on the already estimated ones.

In the above described embodiments, the present invention has been illustrated in the context of coding and decoding the prediction error signal in the frequency domain. However, the present invention is not limited to prediction error signals that are coded in the frequency domain. Rather, the present invention may also be applied to encode and decode prediction errors that are quantized and coded in the spatial domain.

Further, the present invention may be applied individually to luma and chroma components. Thus, individual decision thresholds and correction values may be be coded and transmitted.

Further, quantization information may be signaled to the decoder by coding and transmitting individual threshold values, by coding and transmitting a single threshold parameter, such as the dead zone parameter, or combinations thereof. In the latter case, important threshold values may be coded individually, whereas the other values are coded by a global parameter.

Further, the optimum correction values, e.g. the conditional expectation values of Eq. (15), may be encoded relative to a corresponding decision threshold value, for instance, in terms of an offset or translational parameter.

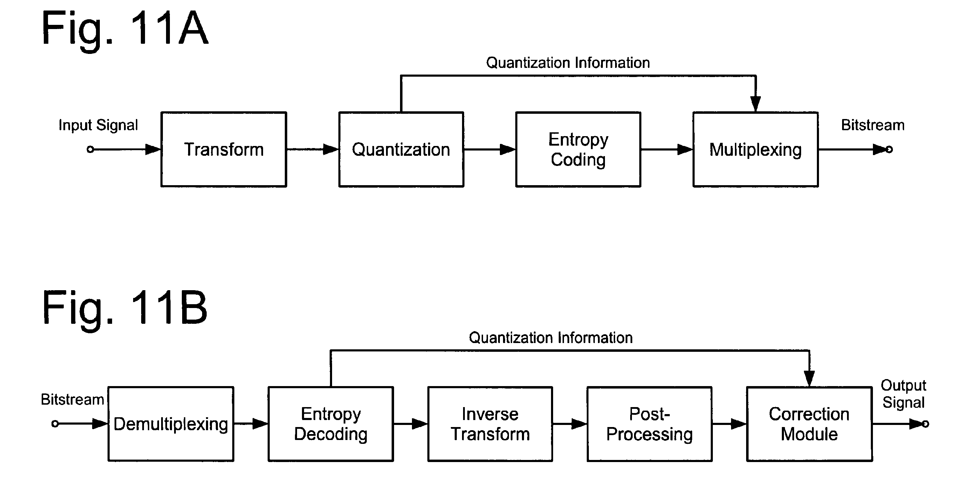

The present invention is not restricted to the case of video data encoding/decoding but may be applied to any form of data compression/decompression based on data quantization and post-processing of the quantized data, such as encoding/decoding of audio data. The general inventive concept is illustrated by Figs. 11 A and 11 B, wherein Fig. 11 A is a schematic block diagram of a generic data compression unit according to the present invention and Fig. 11 B is a schematic block diagram of a generic data decompression unit according to the present invention.

According to the general inventive concept, the encoder gets the input signal and a transform may be applied. There may also be no transform applied, which would mean that the transform is the identity transform. The transformed signal is quantized and the quantized coefficients are entropy coded. In addition to the quantized coefficients, quantization information is transmitted. The quantization information may comprise parameters describing decision thresholds and/or conditional expectation values of coefficient values. The quantized coefficients are multiplexed with the entropy coded coefficients to build the bitstream, which is transmitted to the decoder or stored on a storage means. At the decoder side the bitstream is demultiplexed. The coefficients are demultiplexed, entropy decoded, inverse transformed, and post-processed. Errors introduced during the post processing, i.e. coefficients which are outside the quantization intervals, may be be corrected by the correction module by exploiting the transmitted quantization information, as explained above in connection with Fig. 5.

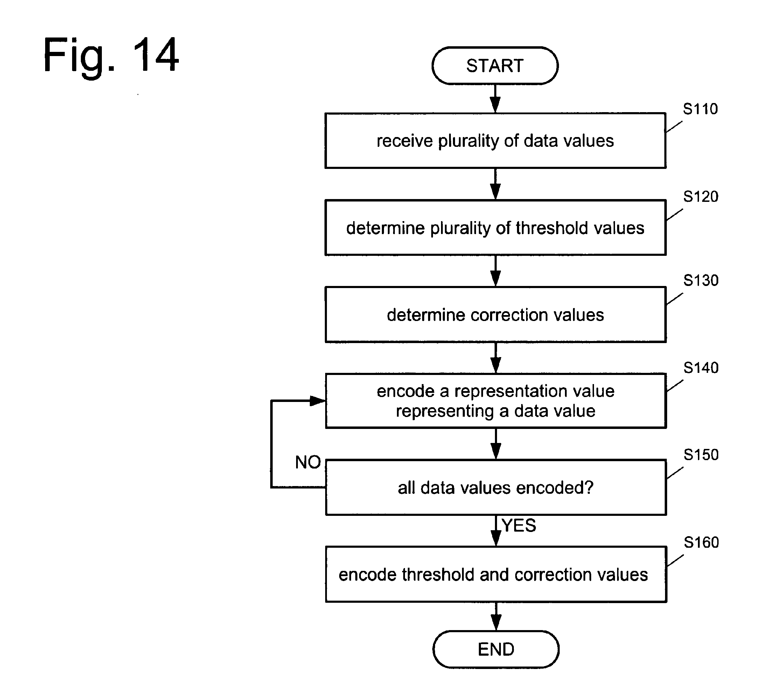

Fig. 14 shows a flowchart of a data compression method according to the general concept of the present invention. In step S110 a plurality of data values to be compressed is received. In step S120 a plurality of threshold values is obtained which are used to quantize the received data values. Preferably, the threshold values are determined in accordance with statistical properties of the data values, in particular in accordance with their probability distribution.

In step S130 correction values are determined that are to be used, at the decoder side, to correct over-filtered data values. Generally, the correction values may also depend on the statistical properties of the ensemble of data values and on the post-processing filter to be applied at the decoder side.

The data values are then quantized on the basis of these threshold values, i.e., in accordance with the quantization intervals defined by the threshold values. Specifically, each data value is represented by one of a plurality of predefined representation values, namely the representation value of the data value's quantization interval. The selected representation value of each data value is then encoded in step S140, for instance, by means of an entropy coding algorithm well known in the art. After having checked in step S150 whether all data values are done, the threshold values employed and the correction values are encoded as well in step S160. The output data thus contains both the quantized data and the information (quantization information and correction information) required for correcting over-filtered data values at the decoder side.

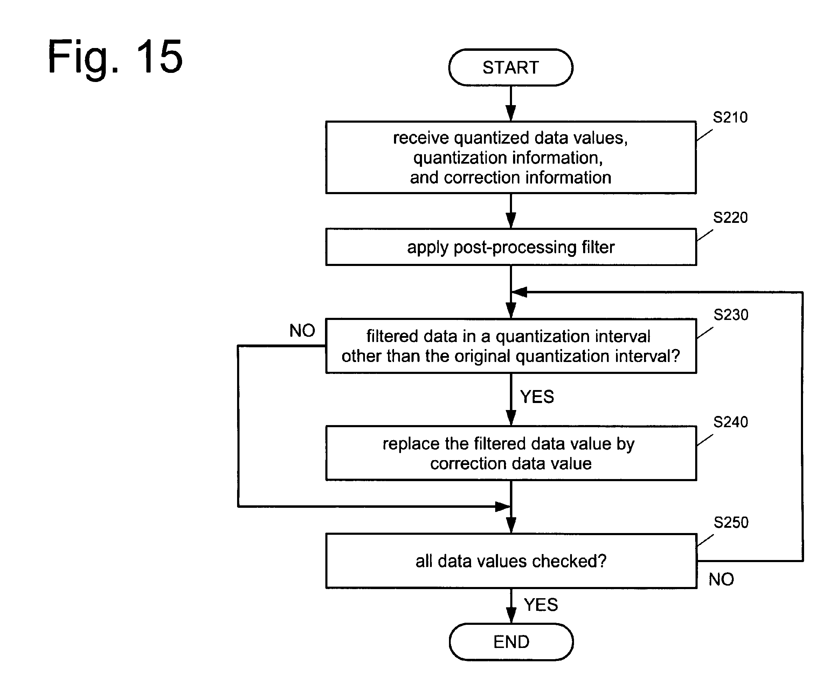

Fig. 15 shows a flowchart of a data decompression method according to the general concept of the present invention. In step S210 the quantized data and the information (quantization information and correction information) required for correcting over-filtered data values is retrieved from the input data. In step S220, a pre-defined post-processing filter is applied to the quantized data. In step S230 it is determined, for each data value and on the basis of the quantization information, whether the application of the post-processing filter has overly altered the data value, i.e., whether the quantization interval of the filtered data value differs from the original quantization interval. If this is found to be the case, the data value concerned is replaced in step S240 by a correction value, as specified by the correction information. Otherwise, it is checked in step S250 whether all data values have been processed.

In this manner, the compressed (quantized) data can be recovered and filtered without introducing additional artifacts in the decoded data.

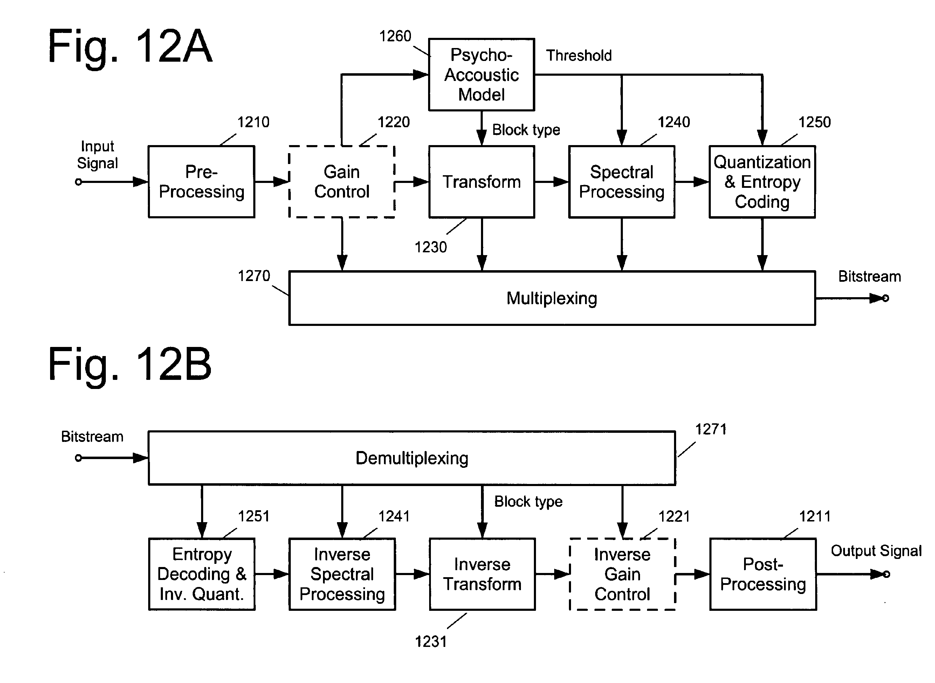

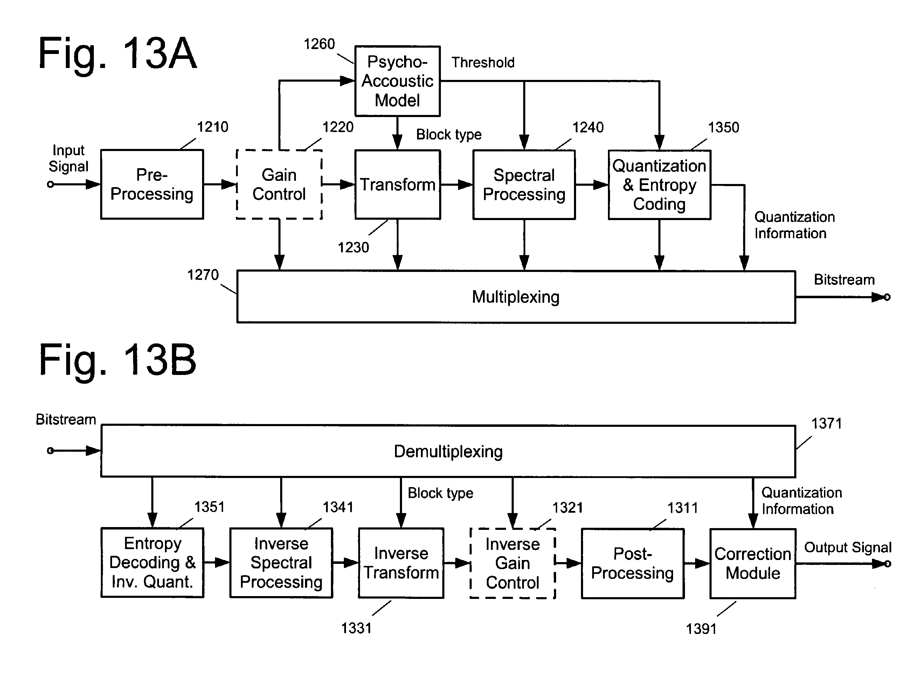

Besides the application of the present invention to video coding, another important application is audio coding, which is now explained in greater detail in the context of the Advanced Audio Coding standard (AAC) and by referring to Figs. 12 and 13.

Fig. 12A shows the main processing blocks of a conventional AAC encoder. The corresponding decoder is shown in Figure 12B. A detailed description of the AAC standard can be found in the book by D. T. Yang, C. Kyriakakis, C.-C. J. Kuo, "High-Fidelity Multichannel Audio coding", EURASIP Book Series on Signal Processing and Communications, 2005.

The operation of a conventional AAC encoder is now explained by referring to Fig. 12A. An input (audio) signal may be pre-processed (1210) and gain-controlled (1220) prior to being fed into transform unit 1230 in order to be transformed from the time domain into the frequency domain. The transformed signal may then be subjected to spectral processing (1240). The resulting data is then quantized and entropy coded (1250). In the quantization processing block the transform coefficients of the audio signal are quantized. The quantization is controlled by the psychoacoustic model (1260), for instance, by setting appropriate quantization thresholds. The output of the entropy coding module 1250 may be multiplexed in multiplexer 1270 with gain information from the (optional) gain control unit (1220) and information of the transform unit (1230) and the spectral processing unit (1240) so as to generate the output bitstream.

The operation of a conventional AAC decoder is now explained by referring to Fig. 12B. A bitstream representing encoded audio data is fed into a demultiplexer (1271) in order to recover information pertinent to the entropy decoding and inverse quantization (1251), the inverse spectral processing (1241), the inverse transform (1231), and the (optional) inverse gain control (1221). Finally, post-processing (1211) may be applied, for instance, in order to improve subjective sound quality. The standardized part of the post processing at the decoder restores the reconstructed signal back to its original amplitude range, if the original sound input to the encoder had out-of-range amplitude. However the post processing may further include additional aspects like noise reduction filtering for example, which is not part of the standard. Such post processing techniques may introduce errors characterized in that the transformed coefficients lie outside their respective quantization intervals.

Block diagrams of an audio encoder and decoder according to an embodiment of the present invention are shown in Fig. 13A and Fig. 13B, respectively.

The block diagram of Fig. 13A is similar to that of Fig. 12A, wherein like elements are denoted by like reference numerals, a repetition of the detailed description of which is omitted. The block diagram of Fig. 13A differs from that of Fig. 12A in that an additional signal including quantization information, such as threshold values and/or expected values, is output from the quantization and entropy coding unit (1350) and multiplexed with the other signals to be included in the bitstream. This allows the decoder to take quantization constraints into account in order to correct post-processing artifacts.

The block diagram of Fig. 13B is also similar to that of Fig. 12B, wherein like elements are denoted by like reference numerals, a repetition of the detailed description of which is omitted. The block diagram of Fig. 13B differs from that of Fig. 12B in that the quantization information is extracted from the bitstream and may be employed by an additional correction module (1391) for correcting coefficients which left their respective quantization intervals due to post-processing (1311). In the correction module (1391), the coefficients may be corrected to optimal values, if necessary, as explained above in conjunction with Fig. 5. In doing so, the quantization information may have to be scaled in accordance with a scaling of the amplitude range, if any.

Hence, it is the particular approach of the present invention to code and transmit quantization interval information from the encoder to the decoder. For each coefficient of a post-processed image signal, it is detected, whether the post-processing changes its value to a value, which is outside the original transmitted quantization interval. In this case, the coefficient is set to the conditional expected value, which is also coded and transmitted from the encoder to the decoder.

Further, the quantization intervals may be coded by assuming that all quantization intervals have different widths. In this case, each decision value is coded individually. Predictive coding may be used using already transmitted decision values. Alternatively, it may be assumed that all quantization intervals have the same width. In this case only a single decision value and the width of the intervals are coded.

Further, the width of the intervals can be coded based on the value of the quantization parameter (QP) and based on the quantization weighting matrix, e.g. the quantization step size, which is associated to a QP value in combination with the quantization weighting matrix, which can be used as a prediction for the width.

Moreover, for each quantization interval, the change of a coefficient value to the next lower and to the next higher quantization interval may be used as condition. For each condition, an individual value of the conditional expected values is coded, transmitted, and used for correction.

Further, only the change of a coefficient value to the next lower and to the next higher quantization interval may be used as the condition. For each of these two conditions, an individual correction value is coded, transmitted, and used for correction.

Further, the coding of the expected values may be based on the transmitted quantization intervals, e.g. the border or the central point of the transmitted quantization interval may be used as prediction. As a prediction value for the expected values, also the (arithmetic) mean of the border of the quantization interval and the corresponding representation value may be used.

Further, the coding of the expected values may be based on already transmitted expected values and the transmitted width, e.g. the weighted sum of an already transmitted expected value and the transmitted width may be used as prediction.

Moreover, the coding of quantization intervals and conditional expected values can be done once per frame, once per slice, or once per block. Specifically, if different QPs are used within one frame, slice, or block, individual quantization intervals and conditional expected values may be encoded.

Further, the coding of the quantization intervals and conditional expected values may be done by exploiting statistical dependencies, e.g. by using predictive coding of the values for one QP from the values for another QP.

Further, the various embodiments of the invention may either be implemented by means of software modules, which are executed by a processor, or directly in hardware. Also a combination of software modules and a hardware implementation is possible. The software modules may be stored on any kind of computer readable storage media, for example RAM, EPROM, EEPROM, flash memory, registers, hard disks, CD-ROM, DVD, etc.

The present invention may in particular be embodied in form of a computer program product comprising a computer readable medium having a computer readable program code embodied thereon, the program code being adapted to carry out a method according to any of the appended claims. However, the present invention may also be embodied as an apparatus for data compression or decompression, in particular as an apparatus for video and/or audio data encoding or decoding, comprising a plurality of functional units, each of which being adapted for performing one step of a method according to any of the appended claims.

According to a further embodiment, it is possible to easily perform the processing shown in the above embodiments in an independent computing system by recording a program for realizing the coding and decoding methods shown in the above-mentioned embodiments onto the storage medium such as a flexible disk.

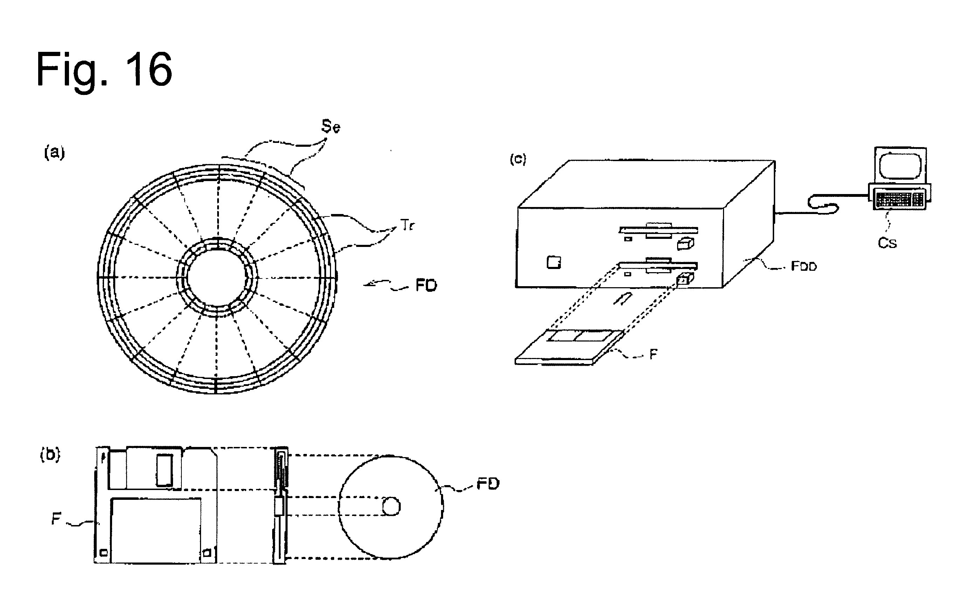

Figure 16 is an illustration of a recording medium for storing a program for realizing any of the described embodiments by a computer system.

Figure 16, part (b) shows a full appearance of a flexible disk, its structure at cross section and the flexible disk itself whereas Figure 16, part (a) shows an example of a physical format of the flexible disk as a main body of a storing medium. A flexible disk FD is contained in a case F, a plurality of tracks Tr are formed concentrically from the periphery to the inside on the surface of the disk, and each track is divided into 16 sectors Se in the angular direction. Therefore, as for the flexible disk storing the above-mentioned program, data as the aforementioned program is stored in an area assigned for it on the flexible disk FD.

Figure 16, part (c) shows a structure for recording and reading out the program on the flexible disk FD. When the program is recorded on the flexible disk FD, the computing system Cs writes in data as the program via a flexible disk drive. When the coding device and the decoding device are constructed in the computing system by the program on the flexible disk, the video/audio coding method and a video/audio decoding method as the program is read out from the flexible disk drive and then transferred to the computing system Cs.

The above explanation is made on an assumption that a storing medium is a flexible disk, however, the same processing can also be performed using an optical disk. In addition, the storing medium is not limited to a flexible disk and an optical disk, but any other medium such as an IC card and a ROM cassette capable of recording a program can be used.

According to still another embodiment, the following is an explanation of the applications of the video/audio coding method as well as the video/audio decoding method as shown in the above-mentioned embodiments, and a system using them.

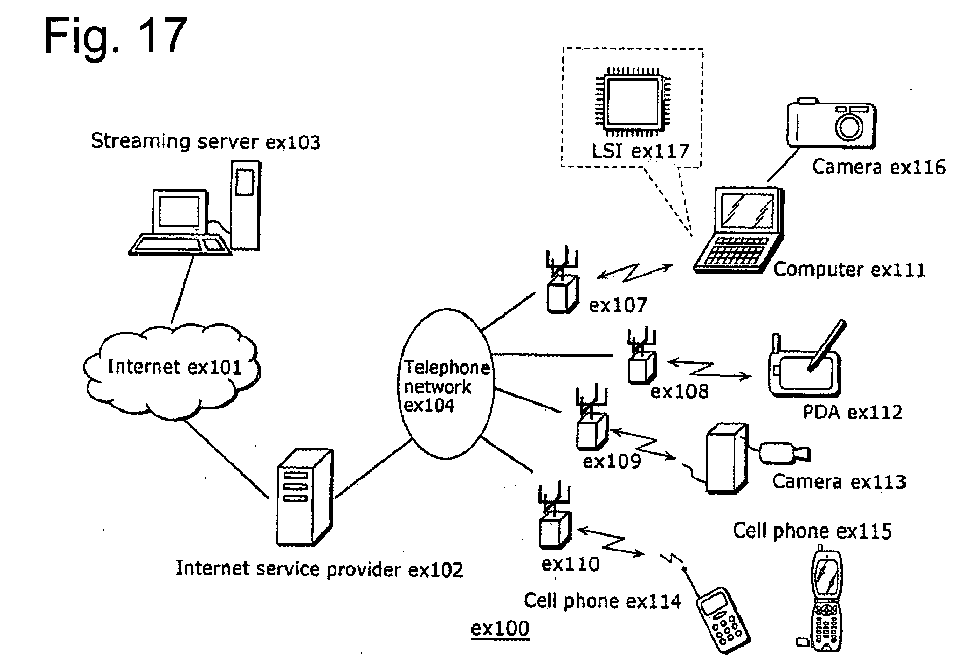

Figure 17 is a block diagram showing an overall configuration of a content supply system ex100 for realizing content distribution service. The area for providing communication service is divided into cells of desired size, and cell sites ex107 to ex110, which are fixed wireless stations are placed in respective cells.

This content supply system ex100 is connected to devices such as Internet ex101, an Internet service provider ex102, a telephone network ex104, as well as a computer ex111, a PDA (Personal Digital Assistant) ex112, a camera ex113, a cell phone ex114 and a cell phone with a camera ex115 via the cell sites ex107 to ex110.

However, the content supply system ex100 is not limited to the configuration as shown in Figure 17 and may be connected to a combination of any of them. Also, each device may be connected directly to the telephone network ex104, not through the cell sites ex107 to ex110.

The camera ex113 is a device capable of shooting video such as a digital video camera. The cell phone ex114 may be a cell phone of any of the following system: a PDC (Personal Digital Communications) system, a CDMA (Code Division Multiple Access) system, a W-CDMA (Wideband-Code Division Multiple Access) system or a GSM (Global System for Mobile Communications) system, a PHS (Personal Handyphone System) or the like.

A streaming server ex103 is connected to the camera ex113 via the telephone network ex104 and also the cell site ex109, which realizes a live distribution or the like using the camera ex113 based on the coded data transmitted from the user. Either the camera ex113 or the server which transmits the data may code the data. Also, the picture (video) data shot by a camera ex116 may be transmitted to the streaming server ex103 via the computer ex111. In this case, either the camera ex116 or the computer ex111 may code the picture (video) data. An LSI ex117 included in the computer ex111 or the camera ex116 actually performs coding processing. Software for video and/or audio coding and decoding may be integrated into any type of storage medium (such as a CD-ROM, a flexible disk and a hard disk) that is a recording medium which is readable by the computer ex111 or the like. Furthermore, a cell phone with a camera ex115 may transmit the picture data. This picture data is the data coded by the LSI included in the cell phone ex115.

The content supply system ex100 codes contents (such as a music live video) shot by a user using the camera ex113, the camera ex116 or the like in the same way as shown in the above-mentioned embodiments and transmits them to the streaming server ex103, while the streaming server ex103 makes stream distribution of the content data to the clients at their requests.

The clients include the computer ex111, the PDA ex112, the camera ex113, the cell phone ex114 and so on capable of decoding the above-mentioned coded data. In the content supply system ex100, the clients can thus receive and reproduce the coded data, and can further receive, decode and reproduce the data in real time so as to realize personal broadcasting.

When each device in this system performs coding or decoding, the data compression and decompression methods of the above-mentioned embodiments can be used.

A cell phone will be explained as an example of the device.

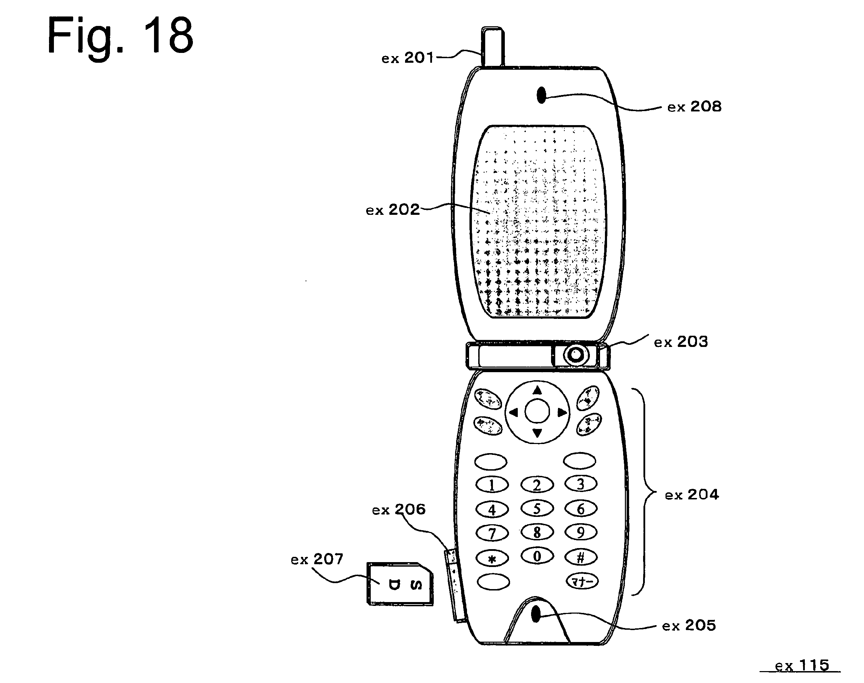

Figure 18 is a diagram showing the cell phone ex115 using the data compression and decompression methods explained in the above-mentioned embodiments. The cell phone ex115 has an antenna ex201 for communicating with the cell site ex110 via radio waves, a camera unit ex203 such as a CCD camera capable of shooting moving and still pictures, a display unit ex202 such as a liquid crystal display for displaying the data such as decoded pictures and the like shot by the camera unit ex203 or received by the antenna ex201, a body unit including a set of operation keys ex204, a audio output unit ex208 such as a speaker for outputting audio, a audio input unit ex205 such as a microphone for inputting audio, a storage medium ex207 for storing coded or decoded data such as data of moving or still pictures shot by the camera, data of received e-mails and that of moving or still pictures, and a slot unit ex206 for attaching the storage medium ex207 to the cell phone ex115. The storage medium ex207 stores in itself a flash memory element, a kind of EEPROM (Electrically Erasable and Programmable Read Only Memory) that is a nonvolatile memory electrically erasable from and rewritable to a plastic case such as an SD card.

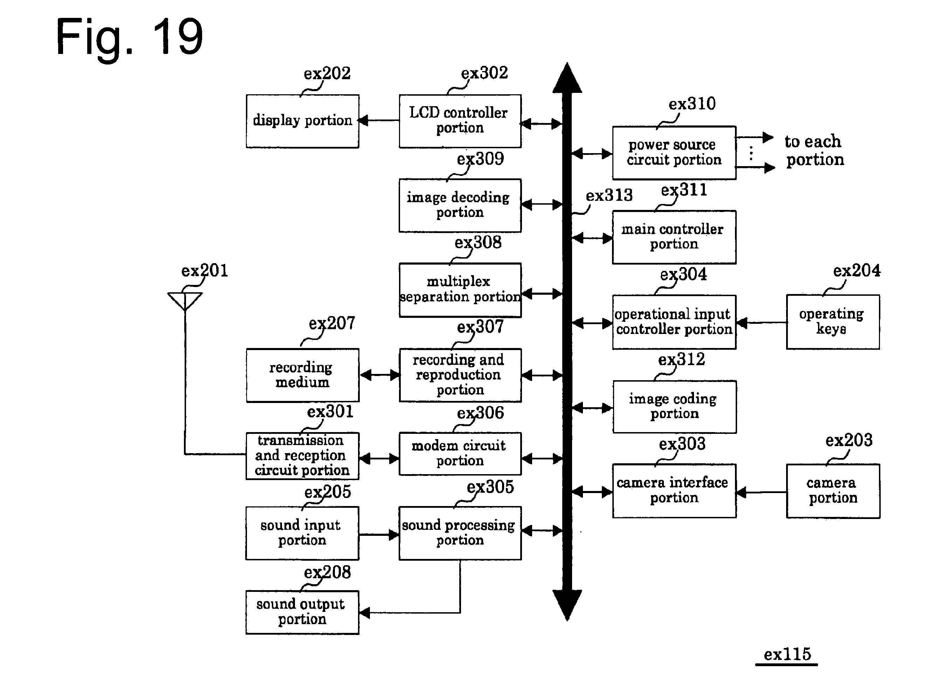

Next, the cell phone ex115 will be explained with reference to Figure 19. In the cell phone ex115, a main control unit ex311, designed in order to control overall each unit of the main body which contains the display unit ex202as well as the operation keys ex204, is connected mutually to a power supply circuit unit ex310, an operation input control unit ex304, a picture coding unit ex312, a camera interface unit ex303, an LCD (Liquid Crystal Display) control unit ex302, a picture decoding unit ex309, a multiplexing/demultiplexing unit ex308, a read/write unit ex307, a modem circuit unit ex306and a audio processing unit ex305via a synchronous bus ex313.

When a call-end key or a power key is turned ON by a user's operation, the power supply circuit unit ex310 supplies respective units with power from a battery pack so as to activate the camera attached digital cell phone ex115 as a ready state.

In the cell phone ex115, the audio processing unit ex305 converts the audio signals received by the audio input unit ex205 in conversation mode into digital audio data under the control of the main control unit ex311 including a CPU, ROM and RAM, the modem circuit unit ex306 performs spread spectrum processing of the digital audio data, and the communication circuit unit ex301 performs digital-to-analog conversion and frequency conversion of the data, so as to transmit it via the antenna ex201. Also, in the cell phone ex115, the communication circuit unit ex301 amplifies the data received by the antenna ex201 in conversation mode and performs frequency conversion and analog-to-digital conversion to the data, the modem circuit unit ex306 performs inverse spread spectrum processing of the data, and the audio processing unit ex305 converts it into analog audio data, so as to output it via the audio output unit ex208.

Furthermore, when transmitting an e-mail in data communication mode, the text data of the e-mail inputted by operating the operation keys ex204 of the main body is sent out to the main control unit ex311 via the operation input control unit ex304. In the main control unit ex311, after the modem circuit unit ex306 performs spread spectrum processing of the text data and the communication circuit unit ex301 performs digital-to-analog conversion and frequency conversion for the text data, the data is transmitted to the cell site ex110 via the antenna ex201.

When picture (video) data is transmitted in data communication mode, the picture data shot by the camera unit ex203 is supplied to the picture coding unit ex312 via the camera interface unit ex303. When it is not transmitted, it is also possible to display the picture data shot by the camera unit ex203 directly on the display unit ex202 via the camera interface unit ex303 and the LCD control unit ex302.

The picture coding unit ex312, which includes a picture coding apparatus as explained in the present invention, compresses and codes the picture data supplied from the camera unit ex203 by the coding method used for the picture coding apparatus as shown in the above-mentioned embodiment so as to transform it into coded picture data, and sends it out to the multiplexing/demultiplexing unit ex308. At this time, the cell phone ex115 sends out the audio received by the audio input unit ex205 during the shooting with the camera unit ex203 to the multiplexing/demultiplexing unit ex308 as digital audio data via the audio processing unit ex305.

The multiplexing/demultiplexing unit ex308 multiplexes the coded picture data supplied from the picture coding unit ex312 and the audio data supplied from the audio processing unit ex305 using a predetermined method, then the modem circuit unit ex306 performs spread spectrum processing of the multiplexed data obtained as a result of the multiplexing, and lastly the communication circuit unit ex301 performs digital-to-analog conversion and frequency conversion of the data for the transmission via the antenna ex201.

As for receiving data of a moving picture file which is linked to a Web page or the like in data communication mode, the modem circuit unit ex306 performs inverse spread spectrum processing of the data received from the cell site ex110 via the antenna ex201, and sends out the multiplexed data obtained as a result of the inverse spread spectrum processing.

In order to decode the multiplexed data received via the antenna ex201, the multiplexing/demultiplexing unit ex308 separates the multiplexed data into a bit stream of picture data and that of audio data, and supplies the coded picture data to the picture decoding unit ex309 and the audio data to the audio processing unit ex305 respectively via the synchronous bus ex313.

Next, the picture decoding unit ex309, including a picture decoding apparatus as explained in the present invention, decodes the bit stream of picture data using the decoding method corresponding to the coding method as shown in the above-mentioned embodiments to generate reproduced moving picture data, and supplies this data to the display unit ex202 via the LCD control unit ex302, and thus the picture data included in the moving picture file linked to a Web page, for instance, is displayed.

At the same time, the audio processing unit ex305 converts the audio data into analog audio data, and supplies this data to the audio output unit ex208, and thus the audio data included in the moving picture file linked to a Web page, for instance, is reproduced.

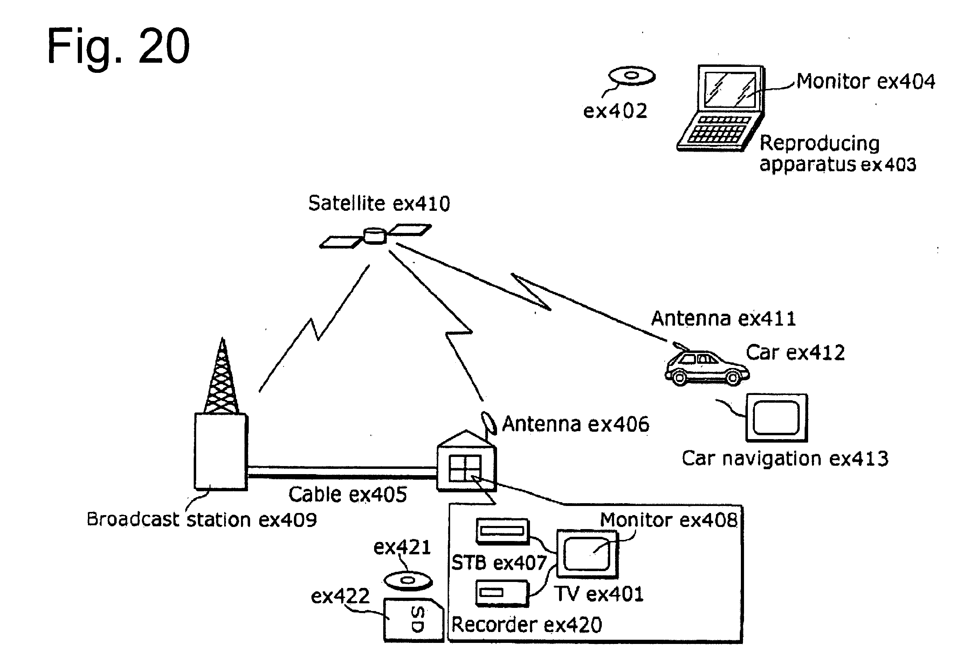

The present invention is not limited to the above-mentioned system as such ground-based or satellite digital broadcasting has been in the news lately and at least either the picture coding apparatus or the picture decoding apparatus described in the above-mentioned embodiments can be incorporated into a digital broadcasting system as shown in Figure 20. More specifically, a bit stream of video information is transmitted from a broadcast station ex409 to or communicated with a broadcast satellite ex410 via radio waves.

Upon receipt of it, the broadcast satellite ex410 transmits radio waves for broadcasting. Then, a home-use antenna ex406 with a satellite broadcast reception function receives the radio waves, and a television (receiver) ex401 or a set top box (STB) ex407 decodes the bit stream for reproduction. The picture decoding apparatus as shown in the above-mentioned embodiment can be implemented in the reproducing apparatus ex403 for reading out and decoding the bit stream recorded on a storage medium ex402 that is a recording medium such as CD and DVD. In this case, the reproduced video signals are displayed on a monitor ex404. It is also conceivable to implement the picture decoding apparatus in the set top box ex407 connected to a cable ex405 for a cable television or the antenna ex406 for satellite and/or ground-based broadcasting so as to reproduce them on a monitor ex408 of the television ex401. The picture decoding apparatus may be incorporated into the television, not in the set top box. Also, a car ex412 having an antenna ex411 can receive signals from the satellite ex410 or the cell site ex107 for reproducing moving pictures on a display device such as a car navigation system ex413 set in the car ex412.

Furthermore, the picture coding apparatus as shown in the above-mentioned embodiments can code picture (video) signals and record them on a recording medium. As a concrete example, a recorder ex420 such as a DVD recorder for recording picture signals on a DVD disk ex421, a disk recorder for recording them on a hard disk can be cited. They can be recorded on an SD card ex422. If the recorder ex420 includes the picture decoding apparatus as shown in the above-mentioned embodiments, the picture signals recorded on the DVD disk ex421 or the SD card ex422 can be reproduced for display on the monitor ex408. As for the structure of the car navigation system ex413, the structure without the camera unit ex203, the camera interface unit ex303 and the picture coding unit ex312, out of the components shown in Figure19, is conceivable. The same applies for the computer ex111, the television (receiver) ex401 and others.

In addition, three types of implementations can be conceived for a terminal such as the above-mentioned cell phone ex114; a sending/receiving terminal implemented with both a coder and a decoder, a sending terminal implemented with a coder only, and a receiving terminal implemented with a decoder only. As described above, it is possible to use the methods described in the above-mentioned embodiments for any of the above-mentioned devices and systems, and by using this method, the effects described in the above-mentioned embodiments can be obtained.

Another embodiment of the invention relates to the implementation of the above described various embodiments using hardware and software. It is recognized that the various embodiments of the invention may be implemented or performed using computing devices (processors). A computing device or processor may for example be general-purpose processors, digital signal processors (DSP), application specific integrated circuits (ASIC), field programmable gate arrays (FPGA) or other programmable logic devices, etc. The various embodiments of the invention may also be performed or embodied by a combination of these devices.

Further, the various embodiments of the invention may also be implemented by means of software modules, which are executed by a processor or directly in hardware. Also a combination of software modules and a hardware implementation may be possible. The software modules may be stored on any kind of computer readable storage media, for example RAM, EPROM, EEPROM, flash memory, registers, hard disks, CD-ROM, DVD, etc.

Most of the examples have been outlined in relation to an H.264/AVC based video coding system or to an AAC based audio coding system, and the terminology mainly relates to the H.264/AVC and the AAC terminology, respectively. However, this terminology and the description of the various embodiments is not intended to limit the principles and ideas of the invention. Also the detailed explanations of the encoding and decoding in compliance with the H.264/AVC standard are intended to better understand the exemplary embodiments described herein and should not be understood as limiting the invention to the described specific implementations of processes and functions in the video coding. Nevertheless, the improvements proposed herein may be readily applied in the video coding described. Furthermore, the concept of the invention may be also readily used in the enhancements of H.264/AVC coding currently discussed by the Joint Video Team (JVT).

To summarize, the present invention relates to data compression, in particular to coding and decoding of video and/or audio data, and provides a method for taking quantization constraints into account during post-processing. Specifically, quantization information indicating the threshold values employed during the quantization process may be determined at the encoder side and encoded together with the quantized data. The quantization information may be employed at the decoder side to detect whether data has been overly altered by post-filtering, i.e., whether a post-filtered data value is within a quantization interval other than the quantization interval of the original data value. In this case, the overly altered data value is replaced by a correction value, which is determined at the encoder side and also encoded together with the quantized data.

**Claims**

1. A method for data compression, said method comprising the steps of

receiving (S110) input data indicating a plurality of data values;

obtaining (S120) a plurality of threshold values, said plurality of threshold values indicating a mapping between data values and a plurality of predefined representation values;

encoding (S140), for each data value of the plurality of data values and in accordance with the plurality of threshold values obtained, a representation value of the plurality of representation values representing the data value;

encoding (S160) the obtained plurality of decision threshold values; and providing output data indicating the encoded representation values and the encoded decision threshold values.

2. A method for data compression according to claim 1, wherein each of the obtained plurality of decision threshold values is encoded relative to a corresponding one of the plurality of predefined representation values.

3. A method for data compression according to claim 1 or 2, further comprising the steps of

determining (S130), for at least one of the plurality of representation values, a correction value for correcting filtering artifacts introduced during decompressing and post-filtering of the compressed data; and

encoding the at least one determined correction value,

wherein the output data is further indicating the at least one encoded correction value.

4. A method for data compression according to claim 3, further comprising the step of

determining data values of the plurality of data values that experience over-filtering upon decompressing and post-filtering,

wherein the step of determining the at least one correction value comprises computation of the mean of the data values determined.

5. A method for data compression according to claim 4, wherein the data values of the plurality of data values that experience over-filtering upon decompressing and post-filtering are determined by applying a post-filter to the corresponding representation values and deciding for each of the data values whether the data value and the corresponding post-filtered representation value are mapped, by the mapping indicated by the plurality of threshold values, to two different representation values.

6. A method for data compression according to claim 5, wherein the data values of the plurality of data values that experience over-filtering upon decompressing and post-filtering are determined by further deciding for each of the data values whether the data value is mapped, by the mapping indicated by the plurality of threshold values, to a representation value greater than or less than the corresponding post-filtered representation value is mapped to.

7. A method for data compression according to any of claims 3 to 6, wherein the at least one determined correction value is encoded relative to the corresponding representation value or relative to a corresponding decision threshold value.

8. A method for data compression according to any of claims 1 to 7, further comprising the steps of

determining, for a certain representation value of the plurality of predefined representation values, a set of data values of the plurality of data values that are represented by the certain representation value; and

adjusting at least one of the plurality of threshold values such that the mean of the determined set of data values equals the certain representation value.

9. A method for encoding video data, comprising the steps of

receiving a block of video data;

transforming the received block of video data from the spatial domain into the frequency domain so as to obtain a plurality of coefficient values; and

compressing the plurality of coefficient values with a method according to any of claims 1 to 8.

10. A method for data decompression, said method comprising the steps of

receiving (S21 0) input data comprising a plurality of quantized data values and quantization information indicating a plurality of quantization intervals;

applying (S220) a post-processing filter to the plurality of quantized data values to obtain a plurality of filtered data values;

determining (230), for each quantized data value, whether the quantized data value and the corresponding filtered data value are part of two different quantization intervals of the plurality of quantization intervals; and

responsive to a result of the determining step, replacing (240) the filtered data value by a correction data value.

11. A method for data decompression according to claim 10, wherein the quantization information comprises a plurality of threshold values.

12. A method for data decompression according to claim 10 or 11, wherein the correction data value is comprised in and obtained from the received input data.

13. A method for data decompression according to any of claims 10 to 12, further comprising the step of selecting the correction data value from a plurality of correction data values on the basis of the quantized data value.

14. A method for data decompression according to claim 13, wherein the correction data value is further selected on the basis of whether the quantized data value is greater than or less than the corresponding filtered data value.

15. A method for decoding video data, comprising the steps of
receiving a plurality of coefficient values;
decompressing the plurality of coefficient values with a method according to any of claims 10 to 13; and
transforming the decompressed plurality of coefficient values from the frequency domain into the spatial domain so as to obtain a block of video data.

# Fig. 1

EP 2 334 078 A1

# Fig. 2

Post Filter Information

Input Signal → Entropy Decoding (191)

Quantized Prediction Error Signal

inv. Quant. / inv. Transform (121)

135 (+)

Deblocking Filter (137)

Decoded Signal

Post Filter (139)

Output Signal

Reconstructed Signal

Prediction Signal

Memory (140)

Intra-Frame Prediction (150)

180 — Intra / Inter

Motion Comp. Prediction (160)

Interpolation Filter (162)

Motion Data

101

EP 2 334 078 A1

# Fig. 3

$c_{i,j}$

$\Delta \cdot \Theta_{i,j}$

$\Delta$

dead zone

0

representation value, $c'_{i,j}$

decision threshold

Fig. 4A

Fig. 4B

Fig. 4C

Fig. 4D

original value

quantized value

filtered value

corrected value

original quantization bin

$c_{i,j}$

# Fig. 5

coefficient value after post-processing $c''_{i,j}$

original noise free coefficient value $c_{i,j}$

quantized value $c'_{i,j}$

0

$c_{i,j}$

Interval with number $I(c_{i,j}) = I_0$

Interval with number $I(c''_{i,j})$

$P\left(c_{i,j} \mid I(c''_{i,j}) > I(c_{i,j}) \wedge I(c_{i,j}) = I_0\right)$

$c_{i,j}$

corrected value $c'''_{i,j}$ (conditional expected value)

corrected value $c'''_{i,j}$ (border of quantization interval)

EP 2 334 078 A1

# Fig. 6

EP 2 334 078 A1

# Fig. 7A

Quantization Information

Input Signal → **Entropy Decoding** (191) → **inv. Quant. / inv. Transform** (121) → Quantized Prediction Error Signal → (+) (135) → **Post-processing** (620) → Decoded Signal → **Correction** (630) → Output Signal

Reconstructed Signal

Prediction Signal → **Prediction** (690)

700

# Fig. 7B

Transform Information    Quantized Coefficients    Quantization Information and Correction Information

Decoded Signal → (+) − → **Transform** → **Coefficient Correction** → **Inverse Transform** → (+) → Corrected Signal

Prediction Signal

630

EP 2 334 078 A1

Fig. 8

Fig. 9

Input Signal → Entropy Decoding (191) → inv. Quant. / inv. Transform (121)

Quantization Information and Correction Values

Quantized Prediction Error Signal → (+) (135) → Post-processing (620) → Decoded Signal → Correction (630) → Output Signal

Reconstructed Signal → Prediction (690) → Prediction Signal

900

# Fig. 10

EP 2 334 078 A1

# Fig. 11A

Quantization Information

Input Signal → **Transform** → **Quantization** → **Entropy Coding** → **Multiplexing** → Bitstream

# Fig. 11B

Quantization Information

Bitstream → **Demultiplexing** → **Entropy Decoding** → **Inverse Transform** → **Post-Processing** → **Correction Module** → Output Signal

EP 2 334 078 A1

## Fig. 12A

Input Signal → **Pre-Processing** 1210 → **Gain Control** 1220 (dashed) → **Transform** 1230 → **Spectral Processing** 1240 → **Quantization & Entropy Coding** 1250

1260 **Psycho-Accoustic Model** → Threshold, Block type

**Multiplexing** 1270 → Bitstream

## Fig. 12B

Bitstream → **Demultiplexing** 1271

→ **Entropy Decoding & Inv. Quant.** 1251 → **Inverse Spectral Processing** 1241 → **Inverse Transform** 1231 → **Inverse Gain Control** 1221 (dashed) → **Post-Processing** 1211 → Output Signal

Block type

EP 2 334 078 A1

## Fig. 13A

Input Signal → Pre-Processing (1210) → Gain Control (1220) → Transform (1230) → Spectral Processing (1240) → Quantization & Entropy Coding (1350) → Multiplexing (1270) → Bitstream

Psycho-Acoustic Model (1260)

Threshold

Block type

Quantization Information

## Fig. 13B

Bitstream → Demultiplexing (1371) → Entropy Decoding & Inv. Quant. (1351) → Inverse Spectral Processing (1341) → Inverse Transform (1331) → Inverse Gain Control (1321) → Post-Processing (1311) → Correction Module (1391) → Output Signal

Block type

Quantization Information

# Fig. 14

```
          ┌──────────┐
          │  START   │
          └────┬─────┘
               │
               ▼
   ┌───────────────────────────┐  S110
   │ receive plurality of data │
   │          values           │
   └─────────────┬─────────────┘
                 │
                 ▼
   ┌───────────────────────────┐  S120
   │ determine plurality of    │
   │    threshold values       │
   └─────────────┬─────────────┘
                 │
                 ▼
   ┌───────────────────────────┐  S130
   │ determine correction      │
   │        values             │
   └─────────────┬─────────────┘
                 │
       ┌─────────▼─────────────┐  S140
   ┌──▶│ encode a representation│
   │   │ value representing a   │
   │   │       data value       │
   │   └─────────┬─────────────┘
   │             │
   │  NO         ▼
   │   ┌───────────────────────┐  S150
   └───│ all data values        │
       │     encoded?           │
       └─────────┬─────────────┘
                 │ YES
                 ▼
   ┌───────────────────────────┐  S160
   │ encode threshold and       │
   │    correction values       │
   └─────────────┬─────────────┘
                 │
                 ▼
          ┌──────────┐
          │   END    │
          └──────────┘
```

EP 2 334 078 A1

33

# Fig. 15

START

↓

receive quantized data values,
quantization information,
and correction information — S210

↓

apply post-processing filter — S220

↓

filtered data in a quantization interval
other than the original quantization interval? — S230

NO →

YES ↓

replace the filtered data value by
correction data value — S240

↓

all data values checked? — S250

NO →

YES ↓

END

EP 2 334 078 A1

Fig. 16

(a)

(b)

(c)

# Fig. 17

Streaming server ex103

LSI ex117

Camera ex116

Computer ex111

ex107

Internet ex101

Telephone network ex104

ex108

PDA ex112

ex109

Camera ex113

Internet service provider ex102

ex110

Cell phone ex115

Cell phone ex114

ex100

EP 2 334 078 A1

Fig. 18

# Fig. 19

ex202

display portion

ex302

LCD controller portion

ex310

power source circuit portion → to each portion

ex309

image decoding portion

ex313 ex311

main controller portion

ex308

multiplex separation portion

ex304

operational input controller portion

ex204

operating keys

ex201

ex207

recording medium

ex307

recording and reproduction portion

ex312

image coding portion

ex301

transmission and reception circuit portion

ex306

modem circuit portion

ex303

camera interface portion

ex203

camera portion

ex205

sound input portion

ex305

sound processing portion

ex208

sound output portion

ex115

EP 2 334 078 A1

# Fig. 20

ex402

Monitor ex404

Reproducing apparatus ex403

Satellite ex410

Antenna ex411

Car ex412

Antenna ex406

Car navigation ex413

Cable ex405

Broadcast station ex409

Monitor ex408

ex421

STB ex407

ex422

TV ex401

SD

Recorder ex420

EP 2 334 078 A1

Europäisches
Patentamt
European
Patent Office
Office européen
des brevets

# EUROPEAN SEARCH REPORT

Application Number

EP 09 01 5431

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | WO 2008/057308 A2 (THOMSON LICENSING [FR]; KAO MENG-PING [US]; YIN PENG [US]; DIVORRA ESC) 15 May 2008 (2008-05-15)<br>* page 16, lines 28-30 *<br>* page 19, lines 21-26 *<br>* page 21, lines 4-10 *<br>* page 22, lines 16-17, 20-24 *<br>* page 23, lines 16-24 *<br>* page 23, line 31 - page 24, line 8 *<br>* page 24, lines 22-29 *<br>* figures 3,4,7-9 * | 1-15 | INV.<br>H04N7/26<br>H04N7/50 |
| A | 8: "Quantisierung"<br>In: Jens-Rainer Ohm: "DIGITALE BILDCODIERUNG"<br>1995, SPRINGER , Berlin , XP007914124<br>ISBN: 978-3-540-58579-4 , pages 181-188<br>* chapter 8.1.2;<br>page 183 - page 184 * | 1-15 | |
| X | FAN Z ET AL: "JPEG decompression with reduced artifacts"<br>JOURNAL OF THE AMERICAN VETERINARY MEDICAL ASSOCIATION, AMERICAN VETERINARY MEDICAL ASSOCIATION, US,<br>vol. 2186, 9 February 1994 (1994-02-09), pages 50-55, XP002116488<br>ISSN: 0003-1488<br>* section 2.2 * | 1-15 | TECHNICAL FIELDS SEARCHED (IPC)<br><br>H04N |

The present search report has been drawn up for all claims

| Place of search | Date of completion of the search | Examiner |
|---|---|---|
| The Hague | 28 July 2010 | Mayer, Claudia |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 09 01 5431

This annex lists the patent family members relating to the patent documents cited in the above-mentioned European search report.
The members are as contained in the European Patent Office EDP file on
The European Patent Office is in no way liable for these particulars which are merely given for the purpose of information.

28-07-2010

| Patent document cited in search report | Publication date | Patent family member(s) | Publication date |
|---|---|---|---|
| WO 2008057308 A2 | 15-05-2008 | CN 101543076 A<br>EP 2082583 A2<br>JP 2010509842 T<br>US 2009257664 A1 | 23-09-2009<br>29-07-2009<br>25-03-2010<br>15-10-2009 |

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1841230 A

- WO 2008057308 A2

**Non-patent literature cited in the description**

- **D. T. YANG ; C. KYRIAKAKIS ; C.-C. J. KUO.** High-Fidelity Multichannel Audio coding. *EURASIP Book Series on Signal Processing and Communications,* 2005